# EUROPÄISCHE PATENTSCHRIFT

(11) **EP 2 794 433 B1**
(45) Veröffentlichungstag und Bekanntmachung des Hinweises auf die Patenterteilung: **18.11.2015**
(21) Anmeldenummer: 12821227.1
(22) Anmeldetag: 21.12.2012
(51) Int. Cl.: B65G 1/137

(54) **KOMMISSIONIERANLAGE SOWIE VERFAHREN ZUM KOMMISSIONIEREN VON ARTIKELN**
PICKING SYSTEM AND METHOD FOR PICKING ARTICLES
INSTALLATION DE PRÉPARATION DES COMMANDES ET PROCÉDÉ DE PRÉPARATION DES MARCHANDISES COMMANDÉES

(30) Priorität: 22.12.2011 AT 18752011
(43) Veröffentlichungstag der Anmeldung: 29.10.2014
(73) Patentinhaber: TGW Logistics Group GmbH, 4600 Wels (AT)
(72) Erfinder: HANSL, Rudolf, A-4020 Linz (AT); LACKNER, Reinhold, A-4663 Laakirchen (AT)
(74) Vertreter: Burger, Hannes
(86) Internationale Anmeldenummer: PCT/AT2012/050204
(87) Internationale Veröffentlichungsnummer: WO 2013/090969

(56) Entgegenhaltungen:
- EP-A1- 1 331 179
- EP-A1- 2 327 644
- EP-A2- 1 452 462
- WO-A1-2006/137096
- DE-A1- 2 445 650
- DE-A1- 10 019 632
- DE-A1-102010 010 305
- JP-A- 54 131 278
- JP-A- 2008 037 567

## Beschreibung

Die Erfindung betrifft ein Verfahren sowie eine Kommissionieranlage zum Kommissionieren von Artikeln aus Lager-Ladehilfsmitteln in Auftrags-Ladehilfsmitteln durch eine Kommissionierperson an einem Kommissionierarbeitsplatz gemäß Kommissionieraufträgen, wie dies in den Ansprüchen 1 und 4 beschrieben ist. Die gattungsgemäße EP 1 331 179 A1 beschreibt eine Kommissionieranlage, in welcher die Lager-Ladehilfsmittel vom Lager zum Kommissionierarbeitsplatz sortiert und in der Reihenfolge richtig geordnet werden können. Hierzu umfasst die Kommissionieranlage ein Lager, in dem die Artikel bevorratet werden. Die Kommissionieranlage umfasst auch einen Bereich zur Kommissionierung von Waren, einschließlich mehrerer Kommissionier-Arbeitsstationen, in denen Waren aus den Lager-Ladehilfsmitteln entnommen und in die Auftrags-Ladehilfsmittel hineinkommissioniert werden. In einer Ausführung sind drei parallel zueinander verlaufende Fördervorrichtungen vorgesehen, wobei an den beiden äußeren Fördervorrichtungen getrennt voneinander die Lager-Ladehilfsmittel sowie die Auftrags-Ladehilfsmittel angefördert werden. Die mittig angeordnete Fördervorrichtung dient zum Abfördern der fertig kommissionierten Auftrags-Ladehilfsmittel sowie der nicht mehr benötigten Lager-Ladehilfsmittel. An den stirnseitigen Enden sind die drei Fördervorrichtungen durch eine Querfördervorrichtung verbunden, welche den Kommissioniertisch ausbildet. Die Kommissionierperson kann die - Artikel von einem Lager-Ladehilfsmittel in ein nebenstehendes Auftrags-Ladehilfsmittel hinein kommissionieren. Nach einer anderen Ausführung sind zwei parallel verlaufende Fördervorrichtungen vorgesehen, die jeweils zum Anfördern bzw. Abfördern von Lager-Ladehilfsmittel bzw. Auftrags-Ladehilfsmittel dienen. Diese beiden Fördervorrichtungen sind stirnseitig durch eine Querfördervorrichtung verbunden, die den Kommissioniertisch ausbildet Anschließend an die Querfördervorrichtung ist weiters eine Kommissionierungsbucht angeordnet, in welcher die zu befüllenden Auftrags-Ladehilfsmittel abgestellt werden.

Aus der WO 2011/107385 A1 ist ein universeller Hochleistungskommissionierarbeitsplatz für Schnelldreher und Langsamdreher bekannt geworden. Dieser Kommissionierarbeitsplatz dient zum manuellen Kommissionieren von Artikeln aus Lagerbehältern in zumindest einen Auftragsbehälter gemäß einem Kommissionierauftrag, der aus mehreren Artikeln bestehen kann.

Die Lagerbehälter können ihrerseits Schnelldreher-Lagerbehälter für schnelldrehende Artikel und Langsamdreher-Lagerbehälter für langsamdrehende Artikel beinhalten, die dem Kommissionierarbeitsplatz zusammen mit dem mindestens einen Auftragsbehälter zugeführt werden. Die einzelnen Lagerbehälter werden dabei in unterschiedlichen Ebenen, ausgehend von eigenen Förderstrecken, dem Kommissionierarbeitsplatz zugeführt. Die Auftragsbehälter sind in einer weiteren unterhalb der Lagerbehälter angeordneten Förderebene bereitgestellt, um so die Artikel aus den bereitgestellten Lagerbehältern entnehmen und in die Auftragsbehälter kommissionieren zu können. Nachteilig dabei ist, dass verschiedene Ebenen vorgesehen sind, um die Lagerbehälter sowie Auftragsbehälter dem Kommissionierarbeitsplatz zuführen zu können. Dadurch wird ein höherer Anlagenaufwand benötigt.

Aus der EP 1 572 558 B2 sind ein Kommissionierplatz sowie ein Verfahren zum Kommissionieren bekannt geworden. Dabei werden im Bereich des Kommissionierplatzes Auftragsbehälter bereitgestellt, welche mittels einer eigenen Fördertechnik an den Kommissionierplatz angefördert werden. Mittels einer darüber angeordneten Förderbahn werden zumindest im Arbeitsbereich der Kommissionierperson die Lagerbehälter gekippt. Dies erfolgt mittels einer Ankippeinrichtung, die die in den Arbeitsbereiche zu transportierenden Lagerbehälter in die gekippte Lage kippt. Weiters umfasst die Förderbahn eine Rückkippeinrichtung, die die Lagerbehälter aus der gekippten Lage wieder zurückkippt. Damit können Lagerbehälter während deren Durchlauf durch den Kommissionierplatz hin zur Kommissionierperson geneigt werden, um so dieser einen besseren Einblick und ein günstigeres Hantieren der Artikel zu ermöglichen. Nachteilig dabei ist der hohe Anlagenaufwand für die Kippeinrichtung im Bereich des Kommissionierarbeitsplatzes.

Die DE 892 129 B beschreibt ein Verfahren sowie eine Vorrichtung zum Schräglegen von Fördergut auf Transportbahnen, bei welcher das Fördergut auf einer bestimmten Strecke in die Schräglage gebracht wird. Die Förderanlage besteht aus einem Plattenbandförderer mit einer einsträngigen Kette und in Scharnieren gelagerten Platten. Die Kette ist über zwei Kettenräder geführt. Der gerade Kettenstrang ist im oberen Teil in einer Profilstahlkonstruktion getragen, und im unteren Strang liegt er auf den Platten auf. Die Führung dieser mittels Scharnieren an der Kette angebrachten Platten kann z. B. mit Laufrollen auf Führungsschienen erfolgen. Durch deren Anordnung wird einmal die Schrägstellung zwangsläufig eingeleitet, auf der vorgesehenen Strecke durchgehalten und mit Ablauf dieser Strecke rückgängig gemacht und gleichzeitig im unteren Teil der Anlage die Rückführung der Platten mit der Kette veranlasst und gewährleistet. Damit werden die auf geschlossenen oder unterbrochenen Transportbahnen zugeführten Transportbehälter zwangsläufig durch aufeinander abgestimmte einzelne Organe aus der waagerechten Ebene um eine parallel zur Förderrichtung liegende Achse in einem Winkelbereich von 60° mit oder ohne Einsatz des Gutgewichts schräg gestellt und damit die Entnahme des als Flaschen gebildeten Fördergutes wesentlich erleichtert. An den Umkehrstellen der Kette wird die Führung der Platten durch umlaufende Leiträder durchgeführt. Nachteilig dabei ist, dass zwar die Entnahme des Fördergutes erleichtert wird, jedoch ein erhöhter Platzbedarf für den Kommissionierplatz erforderlich ist.

Die DE 100 19 632 A1 beschreibt eine Anordnung zum Transport von auf LagerLadehilfsmitteln angeordneten Waren für ein Warenlager, bei dem die Waren außerhalb des Lagerbereichs entlang einer Transportstrecke an Kommissionierarbeitsplätzen zu Kommissioniereinheiten zusammengestellt werden. Zusätzlich sind parallel zur Transportstrecke Pufferplätze zur Aufnahme von Auftrags-Ladehilfsmittel vorgesehen. Um die Artikel von den Lager-Ladehilfsmitteln in die Auftrags-Ladehilfsmittel hinein kommissionieren zu können, muss die Kommissionierperson die Artikel aus den Lager-Ladehilfsmitteln entnehmen, sich um 180° nachdrehen und dann in den oder die dafür vorgesehenen Auftrags-Ladehilfsmitteln ablegen, welche an den Kommissionierplätzen bereitgestellt sind.

Die JP 54 131278 A beschreibt eine Kommissionieranlage zum Kommissionieren von Artikeln aus Lager-Ladehilfsmitteln in Auftrags-Ladehilfsmitteln durch eine Kommissionierperson an Kommissionierarbeitsplätzen. Die Lager-Ladehilfsmittel werden für einen Kommissionierauftrag von einem Lager auf eine Umlauffördervorrichtung übergeben und von dieser über eine Ausschleusvorrichtung auf eine Nebenfördervorrichtung gefördert. An der Nebenfördervorrichtung sind Kommissionierplätze vorgesehen, an welchen die Lager-Ladehilfsmittel bereitgestellt werden. Nach dem Kommissioniervorgang werden die Lager-Ladehilfsmittel wiederum durch die Nebenfördervorrichtung von den Kommissionierplätzen abgefördert und über eine Einschleusvorrichtung wieder in die Umlauffördervorrichtung rückgefördert. Die Auftrags-Ladehilfsmittel werden an einer Umlauffördervorrichtung bereitgestellt. Um die Artikel von den Lager-Ladehilfsmitteln in die Auftrags-Ladehilfsmittel hinein kommissionieren zu können, muss die Kommissionierperson die Artikel aus den Lager-Ladehilfsmitteln entnehmen, sich um 180° nachdrehen und dann in den oder die Auftrags-Ladehilfsmitteln ablegen.

Die WO 2006/1 37096 A1 beschreibt ein automatisches Lagersystem mit modulartigem Aufbau mit mehreren Ebenen übereinander sowie jeweils in einer Ebene nebeneinander angeordneten Förderstrecken. Zusätzlich sind Kommissionierarbeitsplätze vorgesehen.
Die EP 2 327 644 A1 beschreibt eine Kommissionieranlage mit einem Kommissionierarbeitsplatz. Hierbei befindet sich vor der Kommissionierperson eine erste Fördertechnik für die Auftrags-Ladehilfsmittel, welche in Querrichtung zur Kommissionierperson verläuft. Eine zweite Fördertechnik für Lager-Ladehilfsmittel ist auf der von der Kommissionierperson abgewendeten Seite der ersten Fördertechnik und in zwei übereinander liegenden Förderebenen angeordnet. Die Kommissionierperson muss sich somit über die erste Fördertechnik beugen, um Artikel von den Lager-Ladehilfsmitteln entnehmen und in die vor ihm bereitgestellten Auftrags-Ladehilfsmittel hineinkommissionieren zu können.

In der DE 2445650 A1 ist eine Förderanlage beschrieben, an der an doppelstrangig geführten Laufbahnen Teileträger umlaufen. Die Teileträger werden hierbei an den Kopfenden der Förderanlage durch eine kreisbogenförmig ausgebildete Umlenkvorrichtung um 180° umgelenkt. Die Transportbewegung in der Umlenkvorrichtung erfolgt schwerkraftbedingt durch Abstützung an abfallend angeordneten Kugelrollen.

Weitere Förderanlagen sind auch noch aus der DE 10 2005 045 971 A1, der US 4,976,343 A, der US 5,730579 A sowie der FR 2 838 412 A bekannt geworden, welche jedoch nur einen allgemeinen Stand der Technik definieren.

Der vorliegenden Erfindung liegt die Aufgabe zugrunde, eine Kommissionieranlage sowie ein Verfahren zum Kommissionieren von Artikeln aus Lager-Ladehilfsmitteln in Auftrags-Ladehilfsmitteln durch eine Kommissionierperson zu schaffen, bei dem bei geringerem Anlagenaufwand trotzdem ein sicherer und ergonomischer Kommissionierablauf erzielbar ist.

Diese Aufgabe der Erfindung wird durch die Merkmale und Maßnahmen der Ansprüche 1 und 4 gelöst.

Die Vorteile liegen darin, dass so im Bereich der Kommissionierstation der Kommissionieranlage durch die eigens vorgesehenen Umlenkfördertechniken ein stets gleich gerichteter Transportweg beibehalten werden kann, um so auf einfache Art und Weise der Kommissionierperson sowohl die benötigten Auftrags-Ladehilfsmittel als auch die für den Kommissionierauftrag benötigten Lager-Ladehilfsmittel in einem exakt vorbestimmten Ablaufschema zur Verfügung gestellt werden können. Weiters kann damit aber auch ein synchroner Transportvorgang von mehreren Ladehilfsmitteln erfolgen, wodurch Wartezeiten vermieden werden können. So kann der Förderdurchsatz und damit verbunden auch die Kommissionierrate erhöht werden. Dabei bilden die Umlenkfördertechniken bevorzugt eine gemeinsame Förder- bzw. Transportebene aus, wodurch ein Höhenversatz zwischen den Ladehilfsmitteln für die Durchführung des Kommissioniervorganges vermieden wird. Damit kann in einem einfachen Entnahmevorgang in der gleichen Ebene der oder die benötigten Artikel entnommen und auf die jeweils gegenüberliegende Umlenkfördertechnik mit dem entsprechenden Auftrags-Ladehilfsmittel übergeben werden. Dadurch wird ein weites Übergreifen und damit verbunden eine Beugebewegung der Kommissionierperson hin zum entnehmenden Lager-Ladehilfsmittel vermieden, wie dies bei den übereinander sowie gestaffelt hintereinander angeordneten Ladehilfsmitteln bislang üblich war. Damit kann die Kommissionierperson mit einer einfachen Schwenkbewegung des Körpers nach der Entnahme aus dem bereitgestellten Lager-Ladehilfsmittel die Abgabe in das dafür vorgesehene Auftrags-Ladehilfsmittel durchführen. Weiters kann dadurch aber auch ein großes Ausmaß an Geräuschminderung erzielt werden, da keine zusätzlichen Hubbewegungen, Umsetzbewegungen oder dergleichen notwendig sind, um die Ladehilfsmittel im Bereich der Kommissionierstation bereitstellen zu können. Weiters kann dadurch aber auch die Sicherheit für die Kommissionierperson wesentlich erhöht werden, da Scher- oder Quetschstellen nicht vorhanden sind.

Von Vorteil sind dabei auch die zumindest abschnittsweise bogenförmig gekrümmt verlaufenden Transportwege, da so Umsetzstationen vermieden werden können und ein wesentlich geringerer mechanischer und steuerungstechnischer Aufwand entsteht und die Ladehilfsmittel trotzdem in einer vordefinierten Stellung bzw. Position der Kommissionierperson zugefördert werden können.

Von Vorteil ist auch die Maßnahme nach Anspruch 2, da bei rechteckiger Grundrissform der Ladehilfsmittel diese stets mit ihrer längeren Seitenkante der Kommissionierperson zugewendet werden. Damit kann im Bereich der Zu- sowie Abförderung mit geringeren Baubreiten der Förderer das Auslangen gefunden werden.

Gemäß einer Maßnahme nach Anspruch 3, werden das Lager-Ladehilfsmittel ausgehend von einem ersten Übergabeabschnitt an einer ersten Zuförderstrecke entlang dem ersten Transportweg zu einem ersten Übernahmeabschnitt an einem Sammelförderer und das Auftrags-Ladehilfsmittel ausgehend von einem zweiten Übergabeabschnitt an einer zweiten Zufördervorrichtung entlang dem zweiten Transportweg zu einem zweiten Übernahmeabschnitt an genanntem Sammelförderer gefördert werden und dass danach das Lager-Ladehilfsmitfel und das Auftrags-Ladehilfsmittel vom Sammelförderer auf einem gemeinsamen Förderer abgefördert.

Vorteilhaft ist auch eine weitere Ausführungsform nach Anspruch 5, da so mit einem relativ geringen Platzaufwand für die Anordnung der Fördertechniken das Auslangen gefunden werden kann. Bei einem, einen rechteckigen Grundriss aufweisenden Ladehilfsmitteln kann hier auch noch ein hohes Ausmaß an benötigter Förderbreite der Fördertechniken eingespart werden.

Es erweist sich auch von Vorteil, wenn die erste Fördertechnik und zweite Fördertechnik annähernd parallel zueinander verlaufend ausgerichtet sind, da so mit einem möglichst geringen Ausmaß an Platzbedarf das Auslangen gefunden werden kann. Darüber hinaus kann so auch noch der Anschluss an weitere Lagersysteme vereinfacht werden.

In einer möglichen Ausführung sind die erste Fördertechnik und die zweite Fördertechnik an einer dem Kommissionierarbeitsplatz der Kommissionierperson gegenüberliegenden Seite der Kommissionierstation anschließend daran angeordnet. Dadurch kann der Kommissionierarbeitsplatz einfach und ergonomisch gestaltet werden, wobei die Zu- und Abförderung der Ladehilfsmittel unabhängig von den Umlenkfördertechniken erfolgen kann.

Nach einer anderen Ausführungsvariante gemäß Anspruch 6 wird so eine getrennte und stets gerichtete Zuführung der Lager-Ladehilfsmittel als auch der Auftrags-Ladehilfsmittel erzielt. Vorteilhaft ist auch eine Weiterbildung nach Anspruch 7, da dadurch eine Kommissionieranlage mit einer sehr hohen Flexibilität zur Durchführung der Kommissioniervorgänge geschaffen werden kann.

Bei der Ausgestaltung nach Anspruch 8 ist von Vorteil, dass dadurch der notwendige Anlagenaufwand noch zusätzlich gesenkt werden kann, wodurch weitere Kosten für die Anschaffung und den Betrieb gesenkt werden können. Darüber hinaus kann dadurch aber auch noch die Zugänglichkeit für Wartungs- und Instandsetzungstätigkeiten verbessert werden.

Ist die Abfördervorrichtung mit ihrem gemeinsamen Förderer zwischen den jeweils seitlich dazu versetzt angeordneten ersten und zweiten Zufördervorrichtungen angeordnet, so kann eine zentrale Abförderung beider Ladehilfsmittel erfolgen.

Durch die Ausbildung nach Anspruch 9 kann jedes der beiden Ladehilfsmittel getrennt voneinander bereitgestellt werden, wobei während des Transportweges das oder die Ladehilfsmittel mit ihrer bevorzugt längeren Seitenkante der Kommissionierperson zugewendet sind. Damit werden die Kommissioniersicherheit sowie die Ergonomie des Kommissionierarbeitsplatzes verbessert.

Vorteilhaft ist auch eine Ausbildung nach Anspruch 10, da dadurch eine hohe Flexibilität der Abförderung erzielbar ist und trotzdem mit einem gemeinsamen Förderer für die Abförderung das Auslangen gefunden werden kann.

Gemäß einer Ausbildung, wie im Anspruch 11 beschrieben, wird die Möglichkeit geschaffen, jene Ladehilfsmittel, welche eine höhere Bereitstellungsrate aufweisen, direkt von der Kommissionierstation abfördern zu können. Durch das Vorsehen des Einschleusförderers kann ein Stau- bzw. Pufferplatz geschaffen werden, um so auch jene Ladehilfsmittel von der Kommissionierstation wegbefördern zu können, welche eine geringere Bereitstellungsrate aufweisen.

Dabei erweist sich eine Ausgestaltung nach Anspruch 12 vorteilhaft, weil dadurch eine noch höhere Flexibilität für die Zu- sowie Abförderung der Ladehilfsmittel im Bereich der Kommissionierstation erzielbar ist.

Nach einer vorteilhaften Weiterbildung gemäß Anspruch 13 wird die Möglichkeit geschaffen, beide Ladehilfsmittel in etwa zentral bzw. mittig dem Kommissionierarbeitsplatz zuzufördern und diese dann außenseitig nach dem Durchlauf durch die Umlenkfördertechniken abfördern zu können.

Gemäß Anspruch 14 wird die Möglichkeit geschaffen, einen zusätzlichen Abstellplatz im Zuge des Förderweges zu schaffen. Dadurch kann die Wirtschaftlichkeit der gesamten Kommissionieranlage noch weiter verbessert werden.

Definieren die erste Fördertechnik zum Zufördern und die zweite Fördertechnik zum Abfördem eine erste, bevorzugt horizontal ausgerichtete Förderebene, wobei eine durch die Umlenkfördertechnik definierte weitere Förderebene dazu geneigt verlaufend ausgerichtet ist, wird die Bedienerfreundlichkeit für die Kommissionierperson noch weiter verbessert.

Dies deshalb, da insbesondere bei der Verwendung von Transportbehältern als Lager-Ladehilfsmittel, der Sichtkontakt zu der oder den aus dem Lager-Ladehilfsmittel zu kommissionierenden Waren verbessert und darüber hinaus auch noch die Entnahme für die Kommissionierperson wesentlich ergonomischer gestaltet wird. Damit kann die Fehleranfälligkeit der Entnahmefehler reduziert und darüber hinaus auch noch die rasche Ermüdung der Kommissionierperson verringert werden.

Von Vorteil ist aber auch, wenn zwischen der durch die erste Fördertechnik zum Zufördern und die zweite Fördertechnik zum Abfördern definierten Förderebene und der durch die Umlenkfördertechnik definierten weiteren Förderebene in Längsrichtung der Transportrichtung gesehen jeweils ein bogenförmig gekrümmt verlaufender Übergangsabschnitt angeordnet ist. Dadurch wird beim Übersetzten der Ladehilfsmittel zwischen den beiden zueinander geneigt ausgerichteten Förderebenen ein ruckartiger Übergang vermieden, welcher sich bei einem linienförmigen Übergangsbereich sonst durch einen abrupten Lagewechsel zwischen den beiden Förderebenen äußern würde. Somit kann durch das Vorsehen eines bogenförmigen Übergangsabschnittes die Lärmentwicklung reduziert bzw. überhaupt ausgeschaltet werden, da so ein sanfter Übergang der Ladehilfsmittel sowohl bei der Übergabe von der ersten Fördertechnik als auch bei der Übernahme auf die zweite Fördertechnik erzielt werden kann.

Möglich ist dabei auch eine Ausbildung, bei der die Umlenkfördertechnik durch eine Vielzahl von einzelnen Förderrollen gebildet ist. Dadurch wird mit einfachen Mitteln ein individueller Weitertransport der Ladehilfsmittel im Bereich der Umlenkfördertechniken ermöglicht. Damit kann aber auch auf die Ausrichtung des Förderweges rasch eingewirkt werden. Darüber hinaus kann so auch auf unterschiedliche Ladehilfsmittel, insbesondere in deren Größe und Abmessung, Bedacht genommen werden.

Es erweist sich auch von Vorteil, wenn zumindest einzelne der Förderrollen um eine senkrecht bezüglich der durch die Umlenkfördertechnik definierte Förderebene ausgerichtete Schwenkachse verstellbar gelagert sind. Damit wird eine noch individuellere Transportmöglichkeit der Ladehilfsmittel im Bereich der Umlenkfördertechniken ermöglicht. Damit kann ein zusätzliches Umsetzten, Auskreuzen oder andere Transportbewegungen der Ladehilfsmittel im Bereich der Umlenkfördertechnik erfolgen.

Die Ausgestaltung nach Anspruch 15 ermöglicht, dass die Ladehilfsmittel entlang der zusätzlichen Führungsorgane bevorzugt anschlagend daran gefördert werden können.

Zum besseren Verständnis der Erfindung wird diese anhand der nachfolgenden Figuren näher erläutert.

Es zeigen jeweils in stark schematisch vereinfachter Darstellung:
- Fig. 1: eine erste mögliche Ausbildung einer Kommissionieranlage, in Draufsicht;
- Fig. 2: eine weitere mögliche Ausbildung einer Kommissionieranlage, in Draufsicht;
- Fig. 3: eine andere mögliche Ausführung einer Kommissionieranlage, in Draufsicht;
- Fig. 4: eine weitere mögliche Ausführung einer Kommissionieranlage mit mehreren Zufördervorrichtungen, in Draufsicht;
- Fig. 5: eine andere Anordnungsmöglichkeit von Fördertechniken bei einer Kommissionieranlage, in Draufsicht;
- Fig. 6: eine Kommissionieranlage mit jeweils über Umlenkfördertechniken miteinander in Förderverbindung stehenden Zu- und Abfördervorrichtungen;
- Fig. 7: eine weitere mögliche Ausbildung einer Kommissionieranlage, bei welcher im Bereich der Umlenkfördertechnik das Lager-Ladehilfsmittel zur Kommissionierperson hin geneigt gefördert wird;
- Fig. 8: eine andere Möglichkeit zur Ausbildung einer geneigt zur Kommissionierperson hin verlaufenden Förderstrecke im Bereich der Umlenkfördertechnik, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

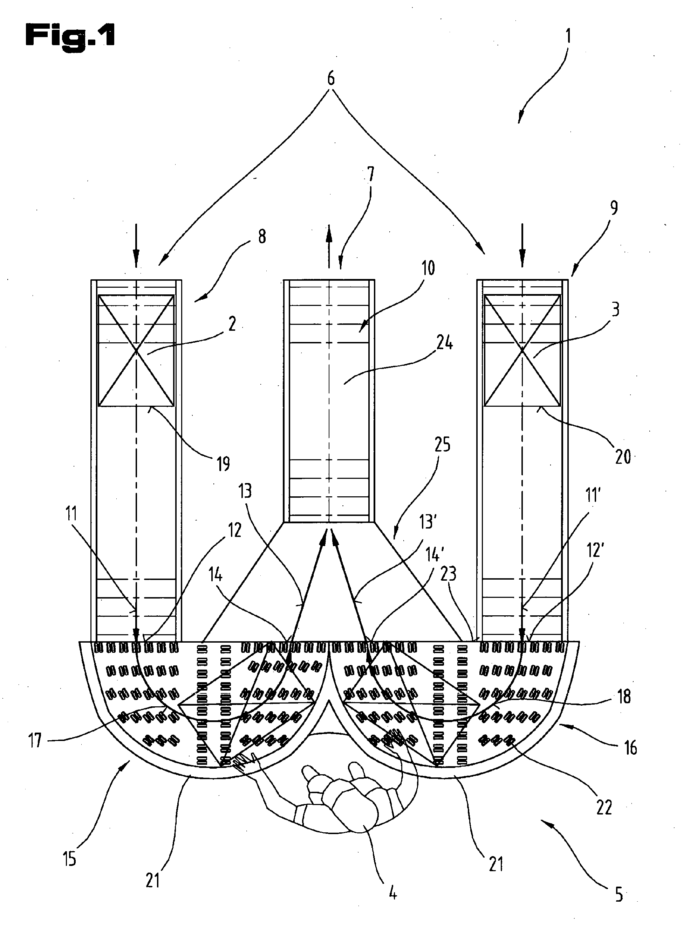

In den nachfolgenden Fig. 1 bis 6 sind unterschiedliche Anordnungsmöglichkeiten sowie Ausbildungen einer Kommissionieranlage 1 gezeigt, wobei allen die gleiche Grundidee zugrunde gelegt ist, nämlich die zu transportierenden Ladehilfsmittel.

In der Fig. 1 ist eine mögliche Ausbildung einer Kommissionieranlage 1 zum Kommissionieren von unterschiedlichen Artikeln aus Lager-Ladehilfsmitteln 2 in Auftrags-Ladehilfsmitteln 3 gezeigt, bei welcher durch eine Kommissionierperson 4 an einem Kommissionierarbeitsplatz gemäß Kommissionieraufträgen aus den Lager-Ladehilfsmitteln 2 die benötigten Artikel entnommen und in die entsprechenden Auftrags-Ladehilfsmittel 3 kommissioniert werden.

Dabei kann der Kommissioniervorgang z.B. derart ablaufen, dass das Auftrags-Ladehilfsmittel 3 solange im Bereich des Kommissionierarbeitsplatzes verbleibt, bis dass der Kommissionierauftrag vollständig abgearbeitet worden ist. Dazu können auch mehrere der Lager-Ladehilfsmitteln 2 mit den entsprechenden Artikeln angefördert, der oder die Artikel entnommen und in das bereitstehende Auftrags-Ladehilfsmittel 3 gegeben werden. Ist der vorgegebene Kommissionierauftrag abgearbeitet, kann das mit den Artikeln beladene Auftrags-Ladehilfsmittel 3 aus dem Bereich des Kommissionierarbeitsplatzes weggefördert und ein neues Auftrags-Ladehilfsmittel 3 bereitgestellt werden, um den nächsten Kommissionierauftrag abarbeiten zu können.

Abweichend von dem zuvor bereits beschriebenen Kommissioniervorgang wäre es aber auch denkbar, ein und dasselbe Lager-Ladehilfsmittel 2 solange im Bereich der Umlenkfördertechnik 15 zu belassen, bis dass in alle Auftrags-Ladehilfsmittel 3 die entsprechenden Artikel in ihrer Anzahl hinein kommissioniert worden sind. Sind keine derartig gleichen Artikel aus dem Lager-Ladehilfsmittel 2 zu entnehmen, kann dieses aus der Kommissionierstation 5 abgefördert werden und ein anderes Lager-Ladehilfsmittel 2 in die Kommissionierstation 5 gefördert werden, um so in einem weiteren Kommissioniervorgang die Artikel in die dafür vorgesehenen Auftrags-Ladehilfsmittel 3 zu kommissionieren. Dabei könnten dann jene Auftrags-Ladehilfsmittel 3, in welche kein derartiger Artikel hinein zu kommissionieren ist, aus dem Kommissionierumlauf zwischenzeitlich herausgeschleust werden und nur jene Auftrags-Ladehilfsmittel 3 der Kommissionierstation 5 zugefördert werden, in welche auch tatsächlich entsprechende Artikel hineinzugeben sind.

Die Kommissionieranlage 1 umfasst eine Kommissionierstation 5, welche den Kommissionierarbeitsplatz für die Kommissionierperson 4 bildet. Die Kommissionierstation 5 steht über eine erste Fördertechnik 6 in Förderverbindung, mit welcher sowohl die Lager-Ladehilfsmittel 2 als auch die Auftrags-Ladehilfsmittel 3 zugeführt werden. Eine zweite Fördertechnik 7 dient zum Abfördern der Lager-Ladehilfsmittel 2 sowie der Auftrags-Ladehilfsmittel 3 nach dem erfolgten Kommissioniervorgang weg vom Kommissionierarbeitsplatz hin in eine nicht näher dargestelltes Lager bzw. Lagersystem.

Bei diesem hier gezeigten Ausführungsbeispiel umfasst die erste Fördertechnik 6 eine erste Zufördervorrichtung 8 sowie eine zweite Zufördervorrichtung 9. Damit ist hier die erste Fördertechnik 6 auf die zwei eigenständigen Zufördervorrichtungen 8 und 9 aufgeteilt, wobei beispielsweise die erste Zufördervorrichtung 8 die Lager-Ladehilfsmittel 2 und die zweite Zufördervorrichtung 9 die Auftrags-Ladehilfsmittel 3 der Kommissionierstation 5 zufördert.

Die zweite Fördertechnik 7 zum Abfördern ist hier durch eine gemeinsame Abfördervorrichtung 10 gebildet, welche nach dem Abarbeiten der Kommissionieraufträge sowohl die Lager-Ladehilfsmittel 2 als auch die Auftrags-Ladehilfsmittel 3 von der Kommissionierstation 5 zu den dazu vorgesehenen jedoch nicht näher dargestellten Lagern bzw. Lagersystemen hinfördert bzw. zurückfördert. Somit dienen die beiden Fördertechniken 6, 7 dazu, die Lager-Ladehilfsmittel 2 sowie die Auftrags-Ladehilfsmittel 3 der Kommissionierstation 5 zuzufördern und von dieser auch wieder abzufördern.

Weiters sei bemerkt, dass die Fördertechniken 6, 7 bzw. die diese bildenden Zufördervorrichtungen 8, 9 sowie die Abfördervorrichtung 10 nur stark schematisch vereinfacht dargestellt sind und durch jede beliebige Fördertechnik gebildet werden können. Dabei kann es sich beispielsweise um Rollenförderer, Bandförderer, Röllchenförderer, Mehrspurförderer handeln.

Der Begriff Ladehilfsmittel 2, 3 ist hier allgemein so zu verstehen, dass dieser die unterschiedlichsten für den Transport der Artikel dienenden Bauteile umfassen kann. So können die Ladehilfsmittel 2, 3 beispielsweise durch Behälter, Tablare, Paletten, Kartonagen oder dergleichen gebildet sein. Die Ladehilfsmittel 2, 3 dienen dazu, um die Artikel bzw. das Kommissioniergut zu lagern und auch während der Transportvorgänge aufzunehmen und mitzutransportieren.

Je nach Ausbildung der Kommissionierstation 5 endet eine Zuförderstrecke 11 bzw. 11' an einem Übergabeabschnitt 12 bzw. 12' zur Kommissionierstation 5. Dadurch dass die erste Fördertechnik 6 hier durch die erste und zweite Zufördervorrichtung 8 bzw. 9 gebildet ist, bildet auch jede der Zufördervorrichtungen 8, 9 eine eigene Zuförderstrecke 11 bzw. 11' aus. Die zweite Fördertechnik 7, welche zum Abfördern sowohl der Lager-Ladehilfsmittel 2 als auch der Auftrags-Ladehilfsmittel 3 dient, beginnt im Anschluss an die Kommissionierstation 5 mit einer Abförderstrecke 13 bzw. 13' an einem Übernahmeabschnitt 14, 14'. Die Übergabeabschnitte 12, 12' der beiden Zufördervorrichtungen 8, 9 bilden somit deren Ende, mit welchem die Ladehilfsmittel 2, 3 zur Kommissionierstation 5 übergeben werden. Im Sinne der Kommissionierstation 5 stellen dann die Übergabeabschnitte 12 bzw. 12' einen Übernahmebereich der Kommissionierstation 5 dar. Das Ende der Kommissionierstation 5 bildet ihrerseits einen Übergabebereich hin auf die Übernahmeabschnitte 14, 14' der Abfördervorrichtung 10 der zweiten Fördertechnik 7.

Die Kommissionierstation 5 umfasst bei diesem Ausführungsbeispiel mehrere, nämlich zwei nebeneinander angeordnete erste und zweite Umlenkfördertechniken 15, 16. Dabei ist bei dem hier gewählten Ausführungsbeispiel die erste Umlenkfördertechnik 15 den Lager-Ladehilfsmitteln 2 und der zweiten Umlenkfördertechnik 16 den Auftrags-Ladehilfsmitteln 3 zugeordnet. Dabei sei erwähnt, dass die hier links dargestellte, erste Zufördervorrichtung 8 für den Transport der Lager-Ladehilfsmittel 2 vorgesehen ist und die zweite Zufördervorrichtung 9 für den Transport der Auftrags-Ladehilfsmittel 3, wobei aber es auch möglich ist, die Lager-Ladehilfsmittel 2 durch die rechts dargestellte, zweite Zufördervorrichtung 9 und die Auftrags-Ladehilfsmittel 3 durch die links dargestellte, erste Zufördervorrichtung 8 der Kommissionierstation 5 zuzufördern.

So ist die erste Umlenkfördertechnik 15 zum Transport der Lager-Ladehilfsmittel 2 im Bereich der Kommissionierstation 5 vorgesehen. Diese Umlenkfördertechnik 15 bildet einen ersten Transportweg 17 für die Lager-Ladehilfsmittel 2 aus und verbindet somit den Übergabeabschnitt 12 der ersten Fördertechnik 6 mit ihrer ersten Zufördervorrichtung 8 mit dem Übernahmeabschnitt 14 der zweiten Fördertechnik 7 mit ihrer gemeinsamen Abfördervorrichtung 10. Die zweite Umlenkfördertechnik 16 dient hier zum Fördern bzw. dem Transport der Auftrags-Ladehilfsmittel 3 und verbindet ihrerseits den Übergabeabschnitt 12' der ersten Fördertechnik 6 mit ihrer zweiten Zufördervorrichtung 9 über einen weiteren bzw. zweiten Transportweg 18 mit dem Übernahmeabschnitt 14' der zweiten Fördertechnik 7 mit ihrer gemeinsamen Abfördervorrichtung 10.

Das Lager-Ladehilfsmittel 2 weist in Transportrichtung gesehen ein vorderes Ende 19 auf, welches beim Antransport durch die erste Zufördervorrichtung 8 voran transportiert wird. Das Auftrags-Ladehilfsmittel 3 weist ebenfalls ein vorderes Ende 20 auf, welches ebenfalls in Transportrichtung gesehen, im Bereich der zweiten Zufördervorrichtung 9 der ersten Fördertechnik 6 voran antransportiert wird. Damit bilden die beiden Enden 19, 20 der beiden Ladehilfsmittel 2, 3 jeweils voraneilende Enden aus.

Die beiden Umlenkfördertechniken 15, 16 sind bei diesem Ausführungsbeispiel derart ausgebildet, dass in Transportrichtung gesehen, jeweils das vordere Ende 19 der Lager-Ladehilfsmittel 2 sowie das vordere Ende 20 der Auftrags-Ladehilfsmittel 3 während deren Weitertransport entlang der jeweiligen Transportwege 17, 18 im Bereich der beiden Umlenkfördertechniken 15, 16 stets das in Transportrichtung vordere Ende der Ladehilfsmittel 2, 3 bilden.

Unter umlenken der Ladehilfsmittel 2, 3 im Bereich der Umlenkfördertechniken 15, 16 wird hier verstanden, dass jeder der Transportwege 17, 18 im Bereich der Umlenkfördertechniken 15, 16 zumindest abschnittsweise bogenförmig gekrümmt verlaufend ausgebildet ist. Bei diesem hier gezeigten Ausführungsbeispiel wird sowohl das Lager-Ladehilfsmittel 2 als auch das Auftrags-Ladehilfsmittel 3 im Bereich der Umlenkfördertechniken 15, 16 in etwa in einem Abschnitt einer Kreisbahn weitergefördert. Dadurch wird erreicht, dass der Kommissionierperson 4 an ihrem Kommissionierarbeitsplatz beispielsweise bei einem einen rechteckigen Grundriss aufweisenden Ladehilfsmittel 2, 3 stets die längere Seitenkante des Ladehilfsmittels 2, 3 zugewendet ist. Damit wird sowohl ein verbesserter Sichtkontakt zu den aus den Lager-Ladehilfsmitteln 2 zu kommissionierenden bzw. entnehmenden Artikeln ermöglicht und auch das Platzangebot zum Ablegen der dem jeweiligen Kommissionierauftrag entsprechenden Artikel in die Auftrags-Ladehilfsmittel 3 verbessert.

Mit dieser Anordnung bezogen auf den Kommissionierarbeitsplatz der Kommissionierperson 4 ist die erste Fördertechnik 6, insbesondere deren erste und zweite Zufördervorrichtung 8, 9 jeweils dem ersten sowie zweiten Transportweg 17, 18 in Transportrichtung des Lager-Ladehilfsmittels 2 sowie des Auftrags-Ladehilfsmittels 3 gesehen vorgeordnet. Die zweite Fördertechnik 7 mit deren Abfördervorrichtung 10 bzw. deren Abfördervorrichtungen 27, 28 ist jeweils dem ersten sowie zweiten Transportweg 17, 18 in Transportrichtung des Lager-Ladehilfsmittels 2 sowie des Auftrags-Ladehilfsmittels 3 gesehen nachgeordnet. Damit befinden sich die erste und die zweite Fördertechnik 6, 7 bezogen auf den Arbeitsplatz der Kommissionierperson 4 auf der von den Umlenkfördertechniken 15, 16 abgewendeten bzw. gegenüberliegenden Seite. Der erste Transportweg 17 der ersten Umlenkfördertechnik 15 weist in seinem Längsverlauf in einem der Kommissionierperson 4 unmittelbar benachbarten Bereich einen Entnahmeabschnitt auf. Der zweite Transportweg 18 der zweiten Umlenkfördertechnik 16 weist in seinem Längsverlauf in einem der Kommissionierperson 4 ebenfalls unmittelbar benachbarten Bereich einen Abgabeabschnitt auf, in welchen die zu kommissionierenden Waren in das dafür vorgesehene Auftrags-Ladehilfsmittel 3 verbracht werden.

Um eine bessere Führung der einzelnen Ladehilfsmitteln 2, 3 während deren Weitertransport entlang der Transportwege 17, 18 im Bereich der Umlenkfördertechniken 15, 16 zu erzielen, kann es vorteilhaft sein, wenn außenseitig bezüglich der Transportwege 17, 18 gesehen an den Umlenkfördertechniken 15, 16 zusätzliche Führungsorgane 21 angeordnet bzw. vorgesehen sind. Mit diesen ist es möglich, dass die Ladehilfsmittel 2, 3 entlang dieser bevorzugt anschlagend daran gefördert werden. Die Förderung der Ladehilfsmittel 2, 3 im Bereich der Umlenkfördertechniken 15, 16 kann beispielsweise durch eine Vielzahl von einzelnen Förderrollen 22 erfolgen. Die Anordnung und Ausbildung der Förderrollen 22 ist dabei von den zu transportierenden Ladehilfsmitteln 2, 3 und/oder der Ausrichtung bzw. dem Längsverlauf der Transportwege 17, 18 bzw. Förderwege in den Umlenkfördertechniken 15, 16 abhängig. Dabei können die Förderrollen 22 auch als sogenannte Förderröllchen ausgebildet sein, welche dann im Bezug auf ihre Drehachse eine relativ geringe Breite aufweisen.

Weiters ist bei einer der Förderrollen 22 im rechten unteren Bereich der zweiten Umlenkfördertechnik 16 gezeigt, dass diese schwenkbar bzw. verstellbar um eine Dreh- bzw. Schwenkachse an der Umlenkfördertechnik 16, wie beispielsweise einem Fördertisch oder dergleichen, gelagert sein kann. Damit wird es möglich, die Förderrolle 22 je nach Bedarf während des Transportvorganges der Ladehilfsmittel 2, 3 um eine senkrecht zu ihrer Drehachse ausgerichtete Schwenkachse zu verstellen, um so Einfluss auf den Förderweg bzw. Transportweg 17, 18 der Ladehilfsmittel 2, 3 zu nehmen. Die Schwenkachse weist dabei bezüglich einer durch die Förderrollen 22 definierten Förder- bzw. Transportebene eine dazu senkrechte Ausrichtung auf. Bevorzugt werden jedoch die Förderrollen 22 überwiegend feststehend im Bereich der Umlenkfördertechniken 15, 16 angeordnet.

Durch das Vorsehen der Umlenkfördertechniken 15, 16 im Bereich der Kommissionierstation 5 können die ersten und zweiten Fördertechniken 6, 7 nebeneinander verlaufend angeordnet sein. Bei diesem hier gezeigten Ausführungsbeispiel sind die ersten und zweiten Fördertechniken 6, 7 annähernd parallel zueinander verlaufend ausgerichtet. Es wäre aber auch denkbar, die Fördertechniken 6, 7 bzw. die diese bildenden Zufördervorrichtungen 8, 9 bzw. die Abfördervorrichtung 10 winkelig zueinander auszurichten. So könnten beispielsweise die erste und zweite Zufördervorrichtung 8, 9 bezüglich der Kommissionierstation 5 auf diese zusammenlaufend ausgerichtet sein. Unabhängig davon wäre es aber auch möglich, die Zufördervorrichtung 8 und/oder 9 ausgehend von der Kommissionierstation 5 auf die davon abgewendet Seite aufeinander zulaufend auszurichten. Unabhängig davon wäre es aber auch noch möglich, nur eine der Zufördervorrichtungen 8, 9 in einem winkeligen Längsverlauf bezüglich der Kommissionierstation 5, insbesondere dem hier geradlinig ausgebildeten Stirnende 23, anzuordnen. Gleiches gilt aber auch für die zweite Fördertechnik 7, insbesondere die gemeinsame Abfördervorrichtung 10.

Wie bereits zuvor beschrieben, sind bei diesem Ausführungsbeispiel die ersten und zweiten Fördertechniken 6, 7 an der Kommissionierstation 5 an einer dem Kommissionierarbeitsplatz gegenüber liegenden Seite anschließend daran angeordnet.

Die beiden Zufördervorrichtungen 8, 9 für die Lager-Ladehilfsmittel 2 sowie die Auftrags-Ladehilfsmittel 3 sind hier außenseitig bezüglich der zweiten Fördertechnik 7 mit ihrer Abfördereinrichtung 10 angeordnet. So umfasst die zweite Fördertechnik 7 zum Abfördern der Lager-Ladehilfsmittel 2 als auch der Auftrags-Ladehilfsmittel 3 die Abfördervorrichtung 10, welche ihrerseits zumindest einen gemeinsamen Förderer 24 umfasst. So ist die Abfördervorrichtung 10 mit ihrem gemeinsamen Förderer 24 zwischen den jeweils seitlich dazu versetzt angeordneten, ersten und zweiten Zufördervorrichtungen 8, 9 angeordnet. Dadurch ergibt sich in weiterer Folge, dass die Transportwege 17, 18 der beiden Umlenkfördertechniken 15, 16 jeweils ausgehend von den Übergabeabschnitten 12, 12' von den ersten und zweiten Zufördervorrichtungen 8, 9 aufeinander zulaufend zum Übernahmeabschnitt 14, 14' der Abfördervorrichtung 10 mit dem gemeinsamen Förderer 24 ausgerichtet sind.

Durch die beiden hier einen in etwa halbkreisförmigen Transportweg 17, 18 definierenden Umlenkfördertechniken 15, 16 sind auch die Übernahmeabschnitte 14, 14' in senkrechter Richtung bezüglich der Zuförderstrecken 11, 11' sowie parallel zum Stirnende 23 verlaufend voneinander distanziert angeordnet. Um sowohl die Lager-Ladehilfsmittel 2 als auch die Auftrags-Ladehilfsmittel 3 ausgehend von den beiden Umlenkfördertechniken 15, 16 hin zum gemeinsamen Förderer 24 der Abfördervorrichtung 10 transportieren zu können, ist dafür ein unmittelbar an die beiden Umlenkfördertechniken 15, 16 nachfolgend angeordneter Sammelförderer 25 vorgesehen, welcher auf seiner der Kommissionierstation 5 zugewendeten Seite mit seinen beiden voneinander distanziert angeordneten Übernahmeabschnitten 14, 14' an die beiden Umlenkfördertechniken 15, 16 anschließt. Die beiden an die Übernahmeabschnitte 14, 14' anschließenden Abförderstrecken 13, 13' sind derart ausgerichtet, dass diese zentral auf den Förderer 24 hin gerichtet sind. Somit wird es mit dem Sammelförderer 25 möglich, sowohl die Lager-Ladehilfsmittel 2 als auch die Auftrags-Ladehilfsmittel 3 von der Kommissionierstation 5 zum gemeinsamen Förderer 24 abzufördern. Dies erfolgt zumeist nacheinander. Dabei kann für den Beginn der Abförderung als Reihenfolge entweder das Lager-Ladehilfsmittels 2 oder das Auftrags-Ladehilfsmittels 3 sowie umgekehrt gewählt werden.

Um im Bereich des Kommissionierarbeitsplatzes der Kommissionierstation 5 für die Kommissionierperson 4 einen besseren Einblick sowie ein ergonomischeres Erfassen, Greifen sowie Ablegen der zu kommissionierenden Artikel zu ermöglichen, kann es vorteilhaft sein, wenn eine durch die Umlenkfördertechnik 15, 16 definierte Förderebene bezüglich einer durch die Fördertechniken 6, 7 zum Zu- und Abfördern definierten weiteren Förderebene geneigt dazu verlaufend ausgerichtet ist. Dabei ist die durch die Fördertechniken 6, 7 definierte Förderebene bevorzugt horizontal ausgerichtet. Die durch die Umlenkfördertechnik 15, 16 definierte, weitere Förderebene ist zumeist hin in Richtung auf die Kommissionierperson geneigt verlaufend.

Somit ist bei dem Transportvorgang der Ladehilfsmittel 2, 3 ausgehend von den Zufördervorrichtungen 8, 9 und dem Weitertransport durch die Umlenkfördertechniken 15, 16 hin zur zweiten Fördertechnik 7 mit der gemeinsamen Abfördervorrichtung 10 gewährleistet, dass sowohl die Lager-Ladehilfsmittel 2 als auch die Auftrags-Ladehilfsmittel 3 während deren Transportweg entlang der Transportwege 17, 18 im Bereich der Umlenkfördertechniken 15, 16 jeweils mit dem vorderen Ende in Transportrichtung transportiert werden. Dies bedeutet, dass der Behälter durch keine zusätzliche Umsetzstation gewendet oder gedreht werden muss, sondern dieser stetig entlang des Transportweges 17, 18 bis zum Erreichen der Kommissionierposition durch die Kommissionierperson 4 transportiert wird. Ist diese Position erreicht, erfolgt die gezielte Entnahme des oder der Artikel aus dem Lager-Ladehilfsmittel 2 durch die Kommissionierperson 4.

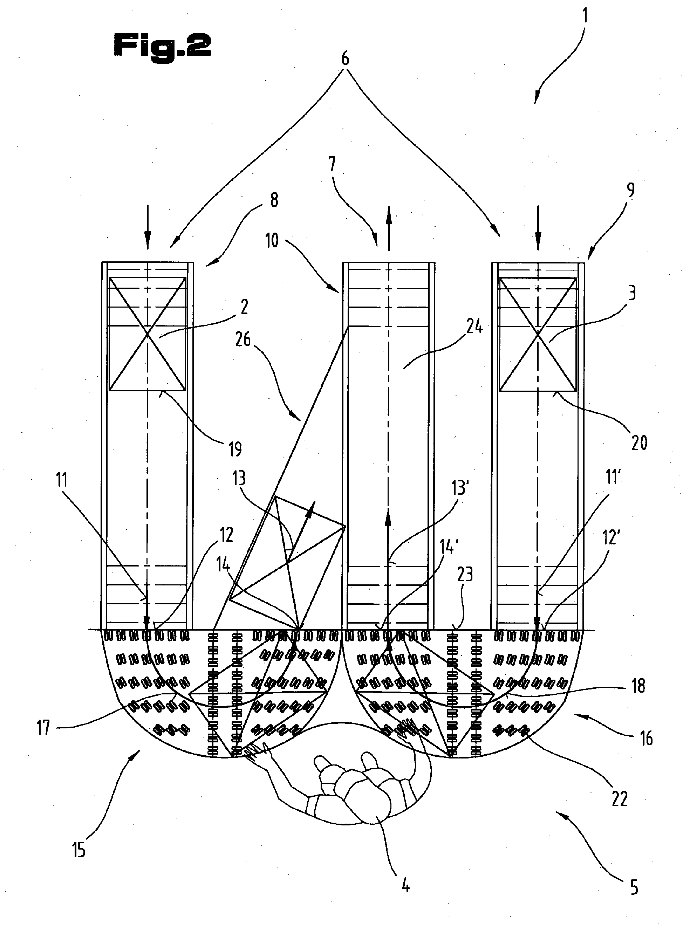

In der Fig. 2 ist eine weitere und gegebenenfalls für sich eigenständige Ausführungsform der Kommissionieranlage 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Diese hier gezeigte Kommissionieranlage 1 ist ähnlich aufgebaut wie jene, welche zuvor detailliert in der Fig. 1 beschrieben worden ist. Auch diese hier gezeigte Kommissionieranlage 1 umfasst wiederum die erste sowie zweite Fördertechnik 6, 7. Die erste Fördertechnik 6 umfasst ihrerseits die erste Zufördervorrichtung 8 für die Lager-Ladehilfsmittel 2 sowie die zweite Zufördervorrichtung 9 für die Auftrags-Ladehilfsmittel 3. Im Bereich der Umlenkförderer 15, 16 werden die Ladehilfsmittel 2, 3 entlang der Transportwege 17, 18 ausgehend von den Übergabeabschnitten 12, 12' hin zu den Übernahmeabschnitten 14, 14' transportiert und dort von der zweiten Fördertechnik 7 übernommen. Im Unterschied zu der zuvor beschriebenen Ausführungsform ist hier kein Sammelförderer 25 vorgesehen. So erfolgt beispielsweise die Abförderung der Auftrags-Ladehilfsmittel 3 direkt von der zweiten Umlenkfördertechnik 16 an den Förderer 24 der gemeinsamen Abfördervorrichtung 10 der zweiten Fördertechnik 7. Der Förderer 24 bildet damit direkt den Übernahmeabschnitt 14' für die von der zweiten Umlenkfördertechnik 16 zugeförderten Auftrags-Ladehilfsmittel 3 und fördert diese entlang der Abförderstrecke 13'ab. An die erste Umlenkfördertechnik 15 schließt hier ein Einschleusförderer 26 mit seinem Übernahmeabschnitt 14 an, welcher mit seiner Abförderstrecke 13 in die weitere Abförderstrecke 13'des gemeinsamen Förderers 24 einmündet.

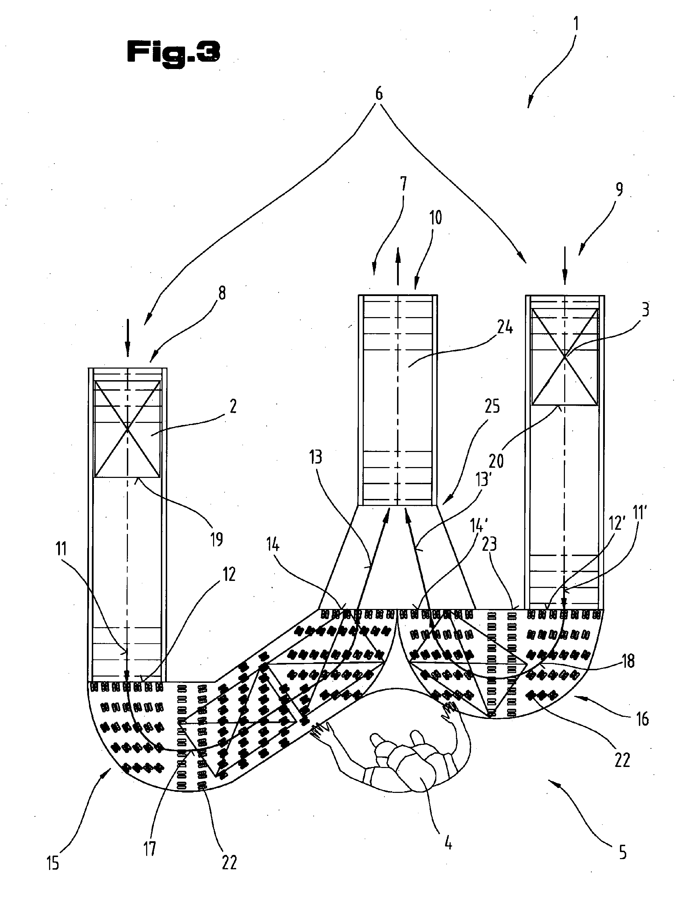

In der Fig. 3 ist eine weitere und gegebenenfalls für sich eigenständige Ausführungsform der Kommissionieranlage 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Die Ausbildung und Anordnung der Abfördervorrichtung 10 mit ihrem gemeinsamen Förderer 24 sowie dem Sammelförderer 25, der zweiten Zufördervorrichtung 9 sowie der zweiten Umlenkfördertechnik 16 entspricht jener Ausbildung, wie diese bereits in der Fig. 1 beschrieben worden ist.

Um im Bereich der ersten Umlenkfördertechnik 15 eine größere Anzahl an Ladehilfsmitteln - im vorliegenden Ausführungsbeispiel die Lager-Ladehilfsmittel 2 - bereitstellen zu können, wird der Transportweg 17 derart gewählt, dass im Bereich der Umlenkfördertechnik 15 an einer dem Kommissionierarbeitsplatz zugewendeten Seite dieser geradlinig verlaufend ausgebildet ist. Dabei sei erwähnt, dass die Anordnung der zumindest teilweise geradlinigen Ausbildung des Transportweges 17 aber auch für die Auftrags-Ladehilfsmittel 3 denkbar ist, um so auch mehrere Auftrags-Ladehilfsmittel 3 im Bereich des Kommissionierarbeitsplatzes der Kommissionierstation 5 bereitstellen zu können.

Unabhängig davon wäre es aber auch möglich, diese geradlinig ausgebildete Förderstrecke zur Bildung des Transportweges 17 und/oder 18 im Bereich beider Umlenkfördertechniken 15, 16 vorzusehen.

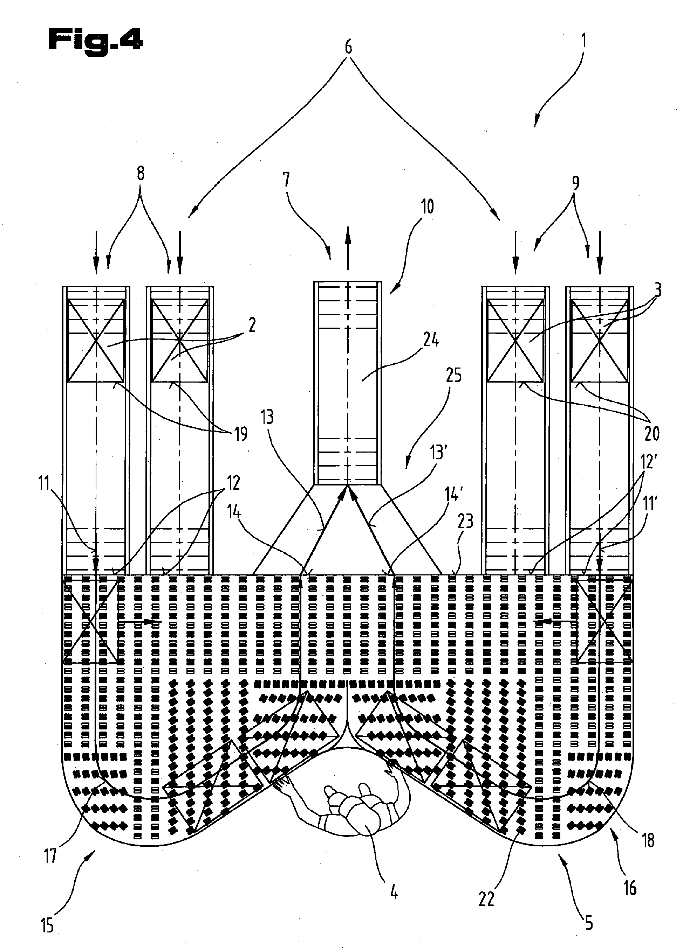

In der Fig. 4 ist eine weitere und gegebenenfalls für sich eigenständige Ausführungsform der Kommissionieranlage 1 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

In der Fig. 4 ist die Kommissionieranlage 1 gezeigt, welche wiederum die erste Fördertechnik 6 oder die zweite Fördertechnik 7 umfasst. Um eine sehr hohe Flexibilität für die Zuführung der Lager-Ladehilfsmittel 2 und/oder der Auftrags-Ladehilfsmittel 3 zu erzielen, ist hier vorgesehen, dass die erste Fördertechnik 6 mehrere erste Zufördervorrichtungen 8 für die Lager-Ladehilfsmittel 2 und/oder mehrere zweite Zufördervorrichtungen 9 für die Auftrags-Lagehilfsmittel umfasst. Im vorliegenden Ausführungsbeispiel ist eine symmetrische Anordnung der jeweils ersten Zufördervorrichtungen 8 sowie der zweiten Zufördervorrichtungen 9 bezüglich der zweiten Fördertechnik 7 mit der Abfördervorrichtung 10, insbesondere dessen gemeinsamen Förderer 24 gewählt.

Dabei sei erwähnt, dass bei diesen Umlenkfördertechniken 15, 16 bevorzugt die Förderrollen 22 schwenkbar bzw. drehbar an einem Grundgestell, insbesondere einem Fördertisch gelagert sind und deren Stellung im unmittelbaren Anschluss Übergabeabschnitte 12, 12'sowie die Übernaheabschnitte 14, 14'in einer Stellung dargestellt sind, welche einen Quertransport der Ladehilfsmittel 2, 3 ermöglichen. Für einen direkten Weitertransport der Ladehilfsmittel 2, 3 ausgehend von den ersten und zweiten Zufördervorrichtungen 8, 9 sind die Förderrollen 22 in eine um 90° geschwenkte Position zu verstellen, damit die Transportwege 17, 18 erzielt werden können.

Die beiden Umlenkfördertechniken 15, 16 bilden für die Kommissionierperson 4 die Kommissionierstation 5 aus, welche aus einer Vielzahl von Rollen oder Förderrollen 22 zur Bildung der Förderebene in diesem Bereich dienen. Durch die mögliche schwenkbare Lagerung bzw. Halterung der einzelnen Förderrollen 22 im Bereich der Umlenkfördertechniken 15, 16 kann ein hohes Maß an Flexibilität bzw. Variabilität zur Umlagerung bzw. dem Weitertransport der einzelnen Ladehilfsmittel 2, 3 im Bereich der Kommissionierstation 5 erfolgen. Damit kann nicht nur ein durchlaufender bzw. durchgängiger Transportweg 17, 18 erreicht werden, sondern es können auch einzelne Ladehilfsmittel 2, 3 je nach Bedarf versetzt transportiert, ausgekreuzt und/oder umgelagert werden.

Auch hier ist wiederum darauf zu achten, dass das in Transportrichtung gesehen vordere Ende 19, 20 der Ladehilfsmittel 2, 3 stets das voraneilende Ende der Ladehilfsmittel 2, 3 bildet.

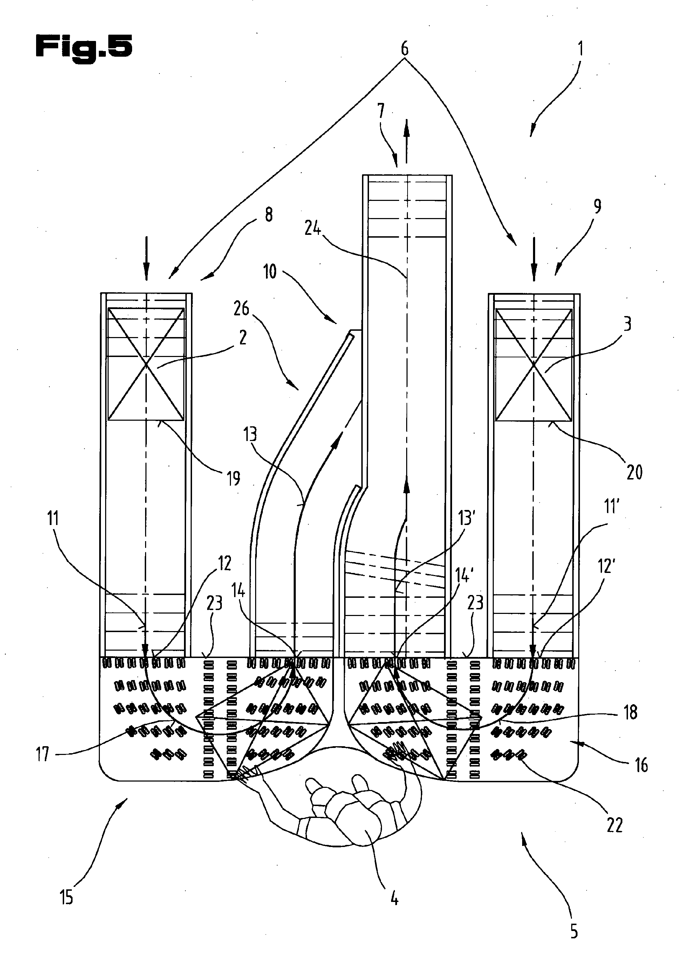

In der Fig. 5 ist eine weitere und gegebenenfalls für sich eigenständige Ausführungsform der Kommissionieranlage 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Die Fig. 5 zeigt eine Variante der Kommissionieranlage 1, wie diese bereits zuvor in der Fig. 2 mit dem Einschleusförderer 26 gezeigt worden ist.

Bei dieser hier gezeigten Ausführungsform ist die Abfördervorrichtung 10 mit ihrem gemeinsamen Förderer 24 unmittelbar anschließend an die zweite Umlenkfördertechnik 16 angeordnet. Der Anschluss des Förderers 24 mit seinem Übernahmeabschnitt 14' ist im unmittelbaren Nahbereich an das Stirnende 23 der Kommissionierstation 5 quer zur Förderrichtung gesehen, breiter ausgebildet als an seinen in Förderrichtung gesehen abgewendeten Ende von der Kommissionierstation 5. Der Einschleusförderer 26 weist eine bereichsweise bogenförmig gekrümmte Abförderstrecke 13 auf, welche im unmittelbaren Anschlussbereich an den Übernahmeabschnitt 14 sowie in deren Einmüdungsabschnitt an die Abförderstrecke 13' des Förderers 24 geradlinig ausgebildet ist. Damit kann ein gerichteterer Abtransport der Ladehilfsmittel 2 und/oder 3 erfolgen, je nachdem welchem Ladehilfsmittel 2, 3 der Einschleusförderer 26 zugeordnet ist.

Weiters ist im Bereich der Kommissionierstation 5 noch gezeigt, dass die beiden Umlenkfördertechniken 15, 16 mit ihren nicht näher bezeichneten Fördertischen zur Halterung bzw. Aufnahme der Förderrollen 22 außenseitig nicht bogenförmig gekrümmt sondern geradlinig verlaufend im Anschluss an die beiden Zufördervorrichtungen 8, 9 verlaufend ausgerichtet sind.

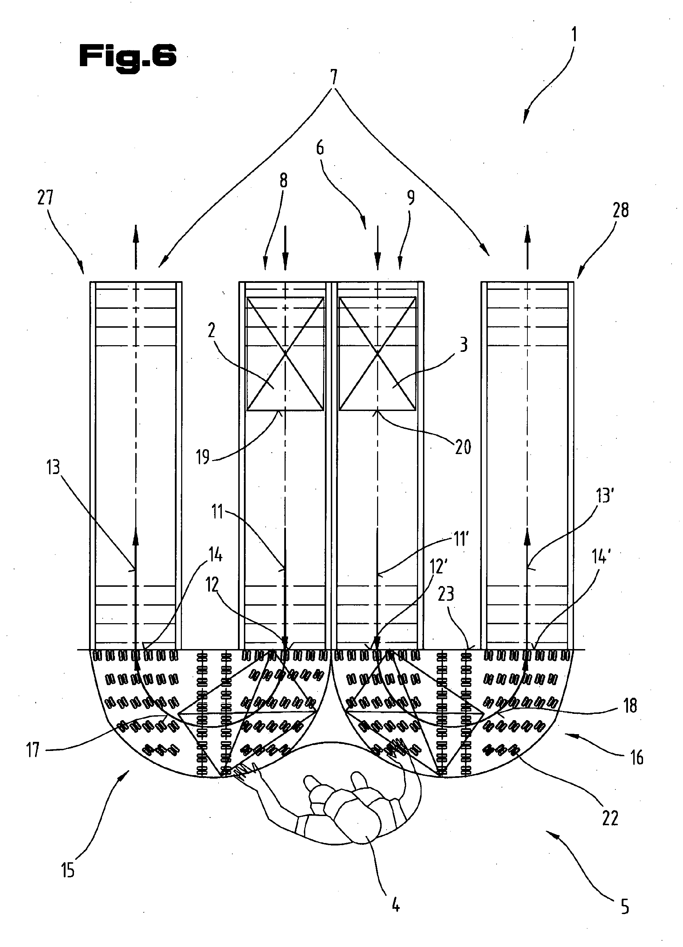

In der Fig. 6 ist eine weitere und gegebenenfalls für sich eigenständige Ausführungsform der Kommissionieranlage 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

In der Fig. 6 ist die Kommissionieranlage 1 mit den beiden Fördertechniken 6, 7 für die Zuförderung sowie Abförderung der Lager-Ladehilfsmittel 2 sowie deren Auftrags-Ladehilfsmittel 3 dargestellt. Für die Abförderung durch die zweite Fördertechnik 7 ist hier zum Abfördern für die Lager-Ladehilfsmittel 2 eine erste Abfördervorrichtung 27 sowie eine zweite Abfördervorrichtung 28 für die Auftrags-Ladehilfsmittel 3 vorgesehen. Damit sind bei diesem Ausführungsbeispiel die Lager-Ladehilfsmittel 2 als auch die Auftrags-Ladehilfsmittel 3 voneinander unabhängig zur Kommissionierstation 5 zuförderbar und nach dem Kommisioniervorgang auch wiederum jeder für sich unabhängig durch die beiden Abfördervorrichtungen 27, 28 abförderbar. Im Gegensatz zu den zuvor beschriebenen Kommissionieranlagen 1 sind hier die beiden Abfördervorrichtungen 27, 28 zur Bildung der zweiten Fördertechnik 7 außenseitig an die beiden Umlenkfördertechniken 15, 16 der Kommissionierstation 5 anschließend angeordnet. Die erste Fördertechnik 6 mit den beiden Zufördervorrichtungen 8, 9 ist dabei zwischen den beiden Abfördervorrichtungen 27, 28 angeordnet. Damit erfolgt eine mittige Bereitstellung der beiden Ladehilfsmittel 2, 3. Nach erfolgtem Kommissioniervorgang werden diese auf jeweils voneinander abgewendete Seiten im Bereich der Kommissionierstation 5 weitergefördert und mittels der hier außenseitig liegenden beiden Abfördervorrichtungen 27, 28 ab- bzw. weggefördert.

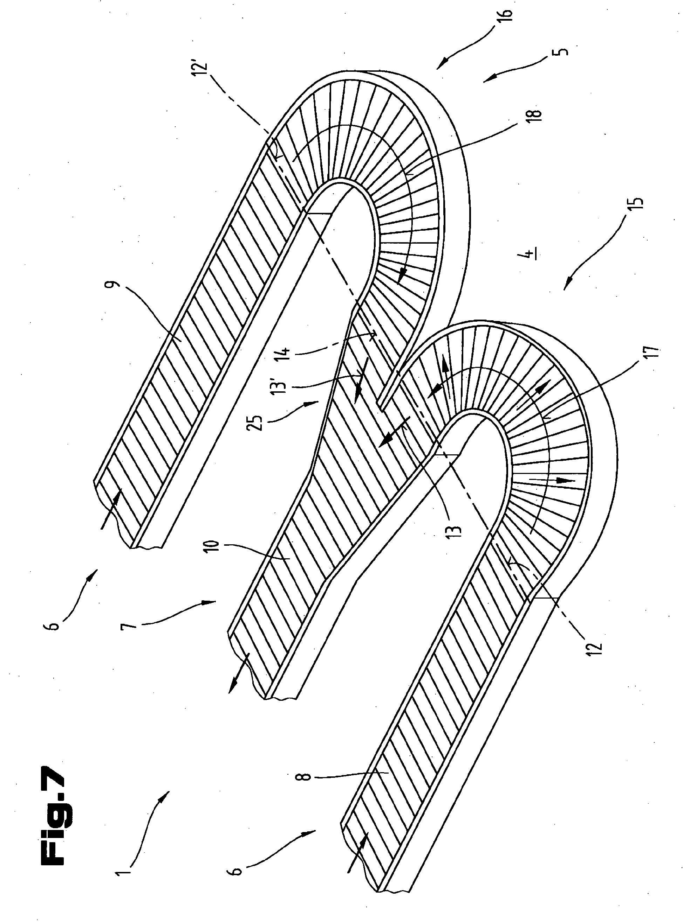

In der Fig. 7 ist vereinfacht in einer schaubildlichen Darstellung die Kommissionieranlage gemäß der Fig. 1, insbesondere die Kommissionierstation 5, dargestellt, wobei jedoch im Gegensatz zu dieser eine der Umlenkfördertechniken, nämlich die erste Umlenkfördertechnik 15, für die hier nicht näher dargestellten Lager-Ladehilfsmittel 2 zumindest in jenem Abschnitt des ersten Transportwegs 17, welcher der Kommissionierperson 4 zugewendet ist, fallend geneigt ausgebildet ist. Weiters sind die Umlenkfördertechniken 15, 16 nicht als tischförmige, durchgängige Transportebene ausgebildet, sondern bilden jeweils eigene Förderbahnen aus, bei welchen wiederum die in Transportrichtung vorderen Enden 19, 20 sowohl das Lager-Ladehilfsmittel 2 als auch das Auftrags-Ladehilfsmittel 3 voran transportiert werden. Die Transportbahnen sind schematisch durch Querstriche angedeutet und können durch aus dem Stand der Technik bekannte Fördermittel gebildet werden.

Dies ist vereinfacht durch Pfeile angedeutet, welche auf den äußeren Rand der ersten Umlenkfördertechnik 15 hin gerichtet verlaufen. Diese Neigung der Förderebene der Umlenkfördertechnik 15 dient dazu, den oder die sich im Bereich der ersten Umlenkfördertechnik 15 befindlichen Lager-Ladehilfsmittel 2 schräg zu stellen bzw. zu neigen, um der Kommissionierperson 4 nicht nur einen besseren Einblick in das Lager-Ladehilfsmittel 2 zu gewähren, sondern auch das Hantieren bzw. Entnehmen der zu entnehmenden Waren aus dem Lager-Ladehilfsmittel 2 zu erleichtern. Als Bezugsebene im Bereich der beiden Fördertechniken 6, 7 wird eine horizontal ausgerichtete Ebene verstanden.

Dieses Neigen bzw. Schrägstellen der Lager-Ladehilfsmittel 2 im Bereich der ersten Umlenkfördertechnik 15 kann z.B. dadurch erfolgen, dass die der ersten Fördertechnik 6 näher liegende bzw. zugewendete Seite bzw. der Abschnitt der ersten Umlenkfördertechnik 15 erhöht verlaufend ausgebildet ist. Eine weitere Möglichkeit besteht darin, den äußeren Umfangsrand der ersten Umlenkfördertechnik 15 gegenüber der durch die erste Fördertechnik 6 gebildeten Förderebene vertieft und somit abgesenkt auszubilden. Dieses Absenken kann kontinuierlich erfolgen, wobei im Übergabeabschnitt 12 der ersten Zufördervorrichtung 8 der Anschluss der ersten Umlenkfördertechnik 15 in einer horizontal ausgerichteten Ebene erfolgt. Anschließend daran kann der Längsverlauf des ersten Transportwegs 17 geneigt, insbesondere verwunden verlaufend ausgebildet sein, wobei hier ein stetiger Übergang, ausgehend von der Horizontalebene hin zur geneigten Transportebene im Bereich der ersten Umlenkfördertechnik 15 und wieder zurück zu einer ebenfalls bevorzugt in der gleichen Förderebene liegenden Horizontalebene hin zur Abförderstrecke 13 erfolgt. Dabei kann auch von einem geschlungenen bzw. verwundenen Förderweg bezogen auf den Transportweg 17 sowie die horizontale Förderebene im Bereich der ersten Fördertechnik 6 gesprochen werden.

Dieses Neigen bzw. Schrägstellen der Lager-Ladehilfsmittel 2 wäre aber auch unabhängig davon für die Auftrags-Ladehilfsmittel 3 im Bereich des zweiten Transportweges 18 der zweiten Umlenkfördertechnik 16 möglich. Dies ist jedoch hier nicht näher dargestellt, wobei bevorzugt die Entnahme der Fördergüter bzw. der zu entnehmenden Waren aus dem Lager-Ladehilfsmittel 2 durch diese Schrägstellung derselben für die Kommissionierperson 4 wesentlich erleichtert wird. Die Abgabe kann dann auch in ein horizontal in der Förderebene im Bereich der zweiten Umlenkfördertechnik 16 transportiertes Auftrags-Ladehilfsmittel 3 erfolgen.

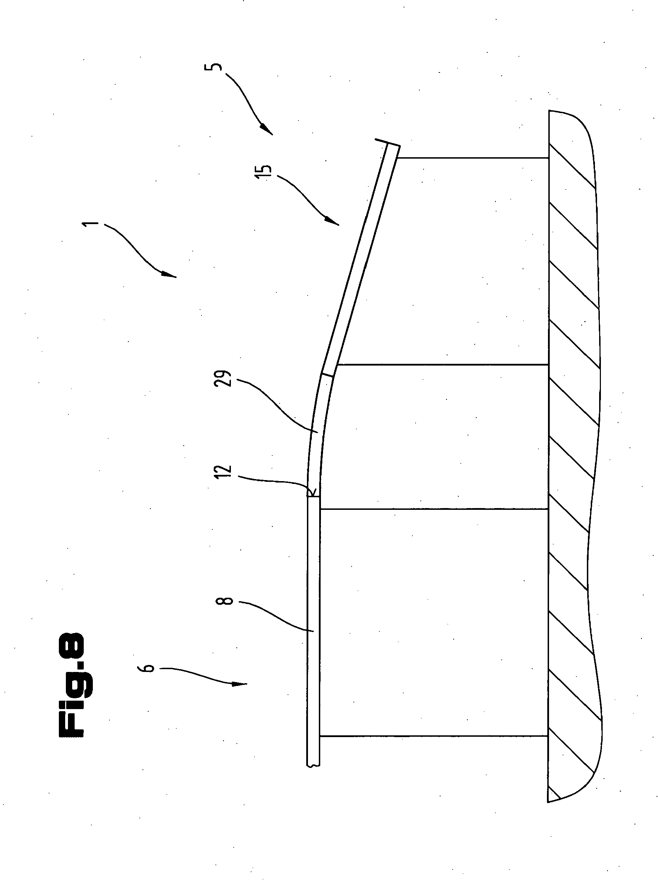

Diese Schrägstellung bzw. Schrägförderung der Lager-Ladehilfsmittel 2 im Bereich der ersten Umlenkfördertechnik 15 könnte aber auch dadurch erfolgen, dass der erste Transportweg 17 in einer durchgehend schräg bezüglich der durch die erste Fördertechnik 6 gebildeten Transportebene dazu geneigt verlaufenden, weiteren Transportebene erfolgt. Damit können sich der Übergabeabschnitt 12 sowie der Übernahmeabschnitt 14 auf gleicher Höhe in vertikaler Richtung gesehen befinden. Um ein ruckartiges, rasches Übersetzen der einzelnen Lager-Ladehilfsmittel 2 von der ersten Fördertechnik 6, insbesondere der ersten Zufördervorrichtung 8, auf die erste Umlenkfördertechnik 15 zu vermeiden, kann ein bogenförmiger Übergangsabschnitt 29 zwischen der ersten Umlenkfördertechnik 15 und der unmittelbar daran anschließenden ersten sowie zweiten Fördertechnik 6, 7 vorgesehen sein. Dies ist noch vereinfacht in der Fig. 8 dargestellt.

Dabei sei erwähnt, dass bei den beiden Fig. 7 und 8 die Förderer nur stark schematisch vereinfacht dargestellt worden sind und auf die Darstellung der übrigen Anlagenteile der besseren Übersichtlichkeit halber verzichtet worden ist.

Der Ordnung halber sei abschließend darauf hingewiesen, dass zum besseren Verständnis des Aufbaus der Kommissionieranlage 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvärianten der Kommissionieranlage 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vor allem können die einzelnen in den Fig. 1; 2; 3; 4; 5; 6; 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Kommissionieranlage
- 2: Lager-Ladehilfsmittel
- 3: Auftrags-Ladehilfsmittel
- 4: Kommissionierperson
- 5: Kommissionierstation

- 6: erste Fördertechnik
- 7: zweite Fördertechnik
- 8: erste Zufördervorrichtung
- 9: zweite Zufördervorrichtung
- 10: Abfördervorrichtung

- 11, 11': Zuförderstrecke
- 12, 12': Übergabeabschnitt
- 13, 13': Abförderstrecke
- 14, 14': Übernahmeabschnitt
- 15: erste Umlenkfördertechnik

- 16: zweite Umlenkfördertechnik
- 17: erster Transportweg
- 18: zweiter Transportweg
- 19: Ende
- 20: Ende

- 21: Führungsorgan
- 22: Förderrolle
- 23: Stirnende
- 24: Förderer
- 25: Sammelförderer

- 26: Einschleusförderer
- 27: erste Abfördervorrichtung
- 28: zweite Abfördervorrichtung
- 29: Übergangsabschnitt

## Patentansprüche

1. Verfahren zum Kommissionieren von Artikeln aus Lager-Ladehilfsmitteln (2) in Auftrags-Ladehilfsmitteln (3) durch eine Kommissionierperson (4) an einem Kommissionierarbeitsplatz gemäß Kommissionieraufträgen, bei dem die Lager-Ladehilfsmittel (2) sowie die Auftrags-Ladehilfsmittel (3) einer Kommissionierstation (5) mittels einer ersten Fördertechnik (6) zugefördert und die Lager-Ladehilfsmittel (2) sowie die Auftrags-Ladehilfsmittel (3) von der Kommissionierstation (5) mittels einer zweiten Fördertechnik (7) abgefördert werden, wobei eine Zuförderstrecke (11, 11') der ersten Fördertechnik (6) an einem Übergabeabschnitt (12, 12') zur Kommissionierstation (5) endet und eine Abförderstrecke (13, 13') der zweiten Fördertechnik (7) an einem Übernahmeabschnitt (14, 14') von der Kommissionierstation (5) beginnt, **dadurch gekennzeichnet, dass** sowohl die Lager-Ladehilfsmittel (2) als auch die Auftrags-Ladehilfsmittel (3) im Bereich der Kommissionierstation (5) jeweils durch Umlenkfördertechniken (15, 16) transportiert werden, wobei die Lager-Ladehilfsmittel (2) mittels der ersten Umlenkfördertechnik (15) vom Übergabeabschnitt (12) der ersten Fördertechnik (6) für die Lager-Ladehilfsmittel (2) über einen, zumindest abschnittsweise bogenförmig gekrümmt verlaufenden, ersten Transportweg (17) zum Übernahmeabschnitt (14) der zweiten Fördertechnik (7) für die Lager-Ladehilfsmittel (2) und die Auftrags-Ladehilfsmittel (3) mittels der zweiten Umlenkfördertechnik (16) vom Übergabeabschnitt (12') der ersten Fördertechnik (6) für die Auftrags-Ladehilfsmittel (3) über einen, zumindest abschnittsweise bogenförmig gekrümmt verlaufenden, weiteren Transportweg (18) zum Übernahmeabschnitt (14') der zweiten Fördertechnik (7) für die Auftrags-Ladehilfsmittel (3) transportiert werden und dass dabei sowohl die Lager-Ladehilfsmittel (2) als auch die Auftrags-Ladehilfsmittel (3) während deren Transportbewegung entlang der Transportwege (17, 18) im Bereich der Umlenkfördertechniken (15, 16) jeweils mit deren vorderen Ende (19, 20) in Transportrichtung transportiert werden, und dass zum Kommissionieren von Artikeln, der Kommissionierperson (4) die Lager-Ladehilfsmittel (2) auf dem ersten Transportweg (17) und die Auftrags-Ladehilfsmittel (3) auf dem weiteren Transportweg (18) bereitgestellt werden, wobei die Kommissionierperson (4) mit einer einfachen Schwenkbewegung des Körpers nach der Entnahme der Artikel aus dem bereitgestellten Lager-Ladehilfsmittel (2) die Abgabe in das dafür vorgesehene Auftrags-Ladehilfsmittel (3) durchführen kann.

2. Verfahren nach Anspruch 1, **dadurch gekennzeichnet, dass** das Lager-Ladehilfsmittel (2) und das Auftrags-Ladehilfsmittel (3) so entlang der Transportwege (17, 18) gefördert werden, dass der Kommissionierperson (4) eine längere Seitenkante des Lager-Ladehilfsmittels (2) und Auftrags-Ladehilfsmittels (3), welche jeweils einen rechteckigen Grundriss aufweisen, zugewendet wird.

3. Verfahren nach Anspruch 1 oder 2, **dadurch gekennzeichnet, dass** das Lager-Ladehilfsmittel (2) ausgehend von einem ersten Übergabeabschnitt (12) an einer ersten Zuförderstrecke (11) entlang dem ersten Transportweg (17) zu einem ersten Übernahmeabschnitt (14) an einem Sammelförderer (25) und das Auftrags-Ladehilfsmittel (3) ausgehend von einem zweiten Übergabeabschnitt (12') an einer zweiten Zufördervorrichtung (11') entlang dem zweiten Transportweg (18) zu einem zweiten Übernahmeabschnitt (14') an genanntem Sammelförderer (25) gefördert werden und dass danach das Lager-Ladehilfsmittel (2) und das Auftrags-Ladehilfsmittel (3) vom Sammelförderer (25) auf einem gemeinsamen Förderer abgefördert werden.

4. Kommissionieranlage (1) zur Durchführung des Verfahrens nach Anspruch 1, umfassend eine erste Fördertechnik (6) zum Zufördern der Lager-Ladehilfsmittel (2) sowie der Auftrags-Ladehilfsmittel (3), eine zweite Fördertechnik (7) zum Abfördern der Lager-Ladehilfsmittel (2) sowie der Auftrags-Ladehilfsmittel (3), eine Kommissionierstation (5), welcher mittels der Fördertechniken (6, 7) die Lager-Ladehilfsmittel (2) sowie die Auftrags-Ladehilfsmittel (3) zuförderbarund abförderbar sind, wobei eine Zuförderstrecke (11, 11') der ersten Fördertechnik (6) an einem Übergabeabschnitt (12, 12') zur Kommissionierstation (5) endet und eine Abförderstrecke (13, 13') der zweiten Fördertechnik (7) an einem Übernahmeabschnitt (14, 14') von der Kommissionierstation (5) beginnt, **dadurch gekennzeichnet, dass** die Kommissionierstation (5) Umlenkfördertechniken (15, 16) umfasst, wobei die erste Umlenkfördertechnik (15) den Übergabeabschnitt (12) der ersten Fördertechnik (6) für die Lager-Ladehilfsmittel (2) über einen, zumindest abschnittsweise bogenförmig gekrümmt verlaufenden, ersten Transportweg (17) mit dem Übernahmeabschnitt (14) der zweiten Fördertechnik (7) für die Lager-Ladehilfsmittel (2) verbindet und die zweite Umlenkfördertechnik (16) den Übergabeabschnitt (12') der ersten Fördertechnik (6) für die Auftrags-Ladehilfsmittel (3) über einen, zumindest abschnittsweise bogenförmig gekrümmt verlaufenden, weiteren Transportweg (18) mit dem Übernahmeabschnitt (14') der zweiten Fördertechnik (7) für die Auftrags-Ladehilfsmittel (3) verbindet, wobei die Umlenkfördertechniken (15, 16) derart ausgebildet sind, dass in Transportrichtung gesehen ein vorderes Ende (19) der Lager-Ladehilfsmittel (2) sowie ein vorderes Ende (20) der Auftrags-Ladehilfsmittel (3) während deren Weitertransport entlang der Transportwege (17, 18) im Bereich der Umlenkfördertechniken (15, 16) stets das in Transportrichtung vordere Ende der Ladehilfsmittel (2, 3) bilden.

5. Kommissionieranlage (1) nach Anspruch 4, **dadurch gekennzeichnet, dass** die erste und zweite Fördertechnik (6, 7) nebeneinander verlaufend angeordnet sind.

6. Kommissionieranlage (1) nach Anspruch 4 oder 5, **dadurch gekennzeichnet, dass** die erste Fördertechnik (6) zum Zufördern eine erste Zufördervorrichtung (8) für die Lager-Ladehilfsmittel (2) sowie eine zweite Zufördervorrichtung (9) für die Auftrags-Ladehilfsmittel (3) umfasst.

7. Kommissionieranlage (1) nach Anspruch 6, **dadurch gekennzeichnet, dass** die erste Fördertechnik (6) zum Zufördern mehrere erste Zufördervorrichtungen (8) für die Langer-Ladehilfsmittel (2) sowie mehrere zweite Zufördervorrichtungen (9) für die Auftrags-Ladehilfsmittel (9) umfasst.

8. Kommissionieranlage (1) nach einem der Ansprüche 4 bis 7, **dadurch gekennzeichnet, dass** die zweite Fördertechnik (7) zum Abfördern eine Abfördervorrichtung (10) mit einem gemeinsamen Förderer (24) sowohl für die Lager-Ladehilfsmittel (2) als auch für die Auftrags-Ladehilfsmittel (3) umfasst.

9. Kommissionieranlage (1) nach Anspruch 8, **dadurch gekennzeichnet, dass** die Transportwege (17, 18) der beiden Umlenkfördertechniken (15, 16) jeweils ausgehend von den Übergabeabschnitten (12, 12') von der ersten und der zweiten Zufördervorrichtung (8, 9) aufeinander zulaufend zum Übernahmeabschnitt (14, 14') der Abfördervorrichtung (10) mit dem gemeinsamen Förderer (24) ausgerichtet sind.

10. Kommissionieranlage (1) nach einem Anspruch 8 oder 9, **dadurch gekennzeichnet, dass** die Abfördervorrichtung (10) mit ihrem gemeinsamen Förderer (24) einen unmittelbar an die beiden Umlenkfördertechniken (15, 16) nachfolgend angeordneten Sammelförderer (25) umfasst, welcher auf seiner der Kommissionierstation (5) zugewendeten Seite mit seinen beiden voneinander distanziert angeordneten Übernahmeabschnitten (14, 14') an die beiden Umlenkfördertechniken (15, 16) anschließt und mit welchem nacheinander sowohl die Lager-Ladehilfsmitteln (2) als auch die Auftrags-Ladehilfsmittel (3) von der Kommissionierstation (5) zum gemeinsamen Förderer (24) abförderbar sind.

11. Kommissionieranlage (1) nach Anspruch 8 oder 9, **dadurch gekennzeichnet, dass** die Abfördervorrichtung (10) mit ihrem gemeinsamen Förderer (24) weiters noch einen seitlich in die Abförderstrecke (13') des gemeinsamen Förderers (24) einmündenden Einschleusförderer (26) umfasst, wobei ein erster Übernahmeabschnitt (14) des Einschleusförderers (26) an einer der Umlenkfördertechniken (15, 16) anschließt und ein zweiter Übernahmeabschnitt (14') des gemeinsamen Förderers (24) an die andere der Umlenkfördertechniken (16, 15) anschließt.

12. Kommissionieranlage (1) nach einem der Ansprüche 4 bis 7, **dadurch gekennzeichnet, dass** die zweite Fördertechnik (7) zum Abfördern eine erste Abfördervorrichtung (27) für die Lager-Ladehilfsmittel (2) sowie eine zweite Abfördervorrichtung (28) für die Auftrags-Ladehilfsmittel (3) umfasst.

13. Kommissionieranlage (1) nach Anspruch 12, **dadurch gekennzeichnet, dass** die erste sowie zweite Abfördervorrichtung (27, 28) der zweiten Fördertechnik (7) außenseitig an die beiden Umlenkfördertechniken (15, 16) der Kommissionierstation (5) anschließen und die erste Fördertechnik (6) zwischen den beiden Abfördervorrichtungen (27, 28) angeordnet ist.

14. Kommissionieranlage (1) nach einem der Ansprüche 4 bis 13, **dadurch gekennzeichnet, dass** der Transportweg (17, 18) im Bereich der Umlenkfördertechnik (15, 16) an einer dem Kommissionierarbeitsplatz der Kommissionierperson (4) zugewendeten Seite zumindest abschnittsweise geradlinig verlaufend ausgebildet ist.

15. Kommissionieranlage (1) nach Anspruch 4, **dadurch gekennzeichnet, dass** außenseitig bezüglich der Transportwege (17, 18) gesehen an den Umlenkfördertechniken (15, 16) zusätzliche Führungsorgane (21) angeordnet bzw. vorgesehen sind.

## Claims

1. A method for picking articles from storage loading aids (2) into order loading aids (3) by an order picker (4) at an order-picking workstation according to picking orders, whereby the storage loading aids (2) as well as the order loading aids (3) of a picking station (5) are supplied by means of a first conveyor system (6) and the storage loading aids (2) as well as the order loading aids (3) are discharged from the picking station (5) by means of a second conveyor system (7), wherein an incoming conveyor path (11, 11') of the first conveyor system (6) ends at a transfer section (12, 12') to the picking station (5) and an outgoing conveyor path (13, 13') of the second conveyor system (7) starts at a pick-up section (14, 14') from the picking station (5), **characterized in that** both the storage loading aids (2) and the order loading aids (3) in the region of the picking station (5) are each transported by diverting conveyor systems (15, 16), wherein the storage loading aids (2) are transported by means of the first diverting conveyor system (15) from the transfer section (12) of the first conveyor system (6) for the storage loading aids (2) to the pick-up section (14) of the second conveyor system (7) for the storage loading aids (2) via a first transport path (17), at least sections of which extend to be arcuate curved, and the order loading aids (3) are transported by means of the second diverting conveyor system (16) from the transfer section (12') of the first conveyor system (6) for the order loading aids (3) to the pick-up section (14') of the second conveyor system (7) for the order loading aids (3) via a further transport path (18), at least sections of which extend to be arcuate curved, and that, as they are being transported along the transport paths (17, 18) in the region of the diverting conveyor (15, 16), both the storage loading aids (2) and the order loading aids (3) are each transported with their the front ends (19, 20) in transport direction, and that for picking articles, the storage loading aids (2) are made available to the order picker (4) on the first transport path (17) and the order loading aids (3) are made available on the further transport path (18), wherein the order picker (4) can place the articles on the order loading aid (3) provided for this purpose by performing a simple swivel movement of the body after the removal of the articles from the available storage loading aid (2).

2. The method according to claim 1, **characterized in that** the storage loading aid (2) and the order loading aid (3) are conveyed along the transport paths (17, 18) in such a manner that a longer side edge of the storage loading aid (2) and order loading aid (3), each having a rectangular plan view, face the order picker (4).

3. The method according to claim 1 or 2, **characterized in that** the storage loading aid (2) is conveyed starting from a first transfer section (12) at a first incoming conveyor path (11) along the first transport path (17) to a first pick-up section (14) at an accumulating conveyor (25) and the order loading aid (3) is conveyed starting from a second transfer section (12') at a second incoming conveyor path (11') along the second transport path (18) to a second pick-up section (14') at said accumulating conveyor (25) and that afterwards, the storage loading aid (2) and the order loading aid (3) are conveyed by the accumulating conveyor (25) onto a common conveyor.

4. A picking system (1) for performing the method according to claim 1, comprising a first conveyor system (6) for supplying the storage loading aids (2) as well as the order loading aids (3), a second conveyor system (7) for discharging the storage loading aids (2) as well as the order loading aids (3), a picking station (5), to and from which the storage loading aids (2) as well as the order loading aids (3) can be supplied and discharged by means of the conveyor systems (6, 7), wherein an incoming conveyor path (11, 11') of the first conveyor system (6) ends at a transfer section (12, 12') to the picking station (5) and an outgoing conveyor path (13, 13') of the second conveyor system (7) starts at a pick-up section (14, 14') from the picking station (5), **characterized in that** the picking station (5) comprises diverting conveyor systems (15, 16), wherein the first diverting conveyor system (15) connects the transfer section (12) of the first conveyor system (6) for the storage loading aids (2) to the pick-up section (14) of the second conveyor system (7) for the storage loading aids (2) via a first transport path (17), at least sections of which are embodied to be arcuate curved, and the second diverting conveyor system (16) connects the transfer section (12') of the first conveyor system (6) for the order loading aids (3) to the pick-up section (14') of the second conveyor system (7) for the order loading aids (3) via a further transport path (18), at least sections of which are embodied to be arcuate curved, wherein the diverting conveyor systems (15, 16) are configured in such a way that, as seen in transport direction, a front end (19) of the storage loading aids (2) as well as a front end (20) of the order loading aids (3) always form the front end of the loading aids (2, 3) as seen in transport direction while they are being transported onwards along the transport paths (17, 18) in the region of the diverting conveyor systems (15, 16).

5. The picking system (1) according to claim 4, **characterized in that** the first and the second conveyor system (6, 7) are arranged so as to extend one next to the other.

6. The picking system (1) according to claim 4 or 5, **characterized in that**, for supplying, the first conveyor system (6) comprises a first incoming conveyor device (8) for the storage loading aids (2) as well as a second incoming conveyor device (9) for the order loading aids (3).

7. The picking system (1) according to claim 6, **characterized in that**, for supplying, the first conveyor system (6) comprises several first incoming conveyor devices (8) for the storage loading aids (2) as well as several second incoming conveyor devices (9) for the order loading aids (9).

8. The picking system (1) according to one of claims 4 to 7, **characterized in that**, for discharging, the second conveyor system (7) comprises an outgoing conveyor device (10) with a common conveyor (24) for both the storage loading aids (2) and the order loading aids (3).

9. The picking system (1) according to claim 8, **characterized in that** the transport paths (17, 18) of the two diverting conveyor systems (15, 16) are aligned to extend towards each other, each starting from the transfer sections (12, 12') of the first and the second incoming conveyor device (8, 9) in the direction of the pick-up section (14, 14') of the outgoing conveyor device (10) with the common conveyor (24).

10. The picking system (1) according to one of claims 8 or 9, **characterized in that**, with its common conveyor (24), the outgoing conveyor device (10) comprises an accumulating conveyor (25), which is arranged to be directly downstream from the two diverting conveyor systems (15, 16) and which, on its side facing the picking system (5), adjoins the two diverting conveyor systems (15, 16) with its two pick-up sections (14, 14'), which are arranged so as to be spaced apart from each other and by means of which both the storage loading aids (2) and the order loading aids (3) can be conveyed from the picking station (5) to the common conveyor (24) one after the other.

11. The picking system (1) according to claim 8 or 9, **characterized in that**, with its common conveyor (24), the outgoing conveyor device (10) further comprises an inbound gate conveyor (26) opening into a side of the outgoing conveyor path (13') of the common conveyor (24), wherein a first pick-up section (14) of the inbound gate conveyor (26) adjoins one of the diverting conveyor systems (15, 16), and a second pick-up section (14') of the common conveyor (24) adjoins the other one of the diverting conveyor systems (16, 15).

12. The picking system (1) according to one of claims 4 to 7, **characterized in that** the second conveyor system (7) for discharging comprises a first outgoing conveyor device (27) for the storage loading aids (2) as well as a second outgoing conveyor device (28) for the order loading aids (3).

13. The picking system (1) according claim 12, **characterized in that** both the first and the second outgoing conveyor device (27, 28) of the second conveyor system (7) adjoin the outside of the two diverting conveyor systems (15, 16) of the picking station (5) and the first conveyor system (6) is arranged between the two outgoing conveyor devices (27, 28).

14. The picking system (1) according to one of claims 4 to 13, **characterized in that** transport path (17, 18) in the region of the diverting conveyor system (15, 16) at a side facing the order-picking workstation of the order picker (4) is configured to be rectilinear at least in sections.

15. The picking system (1) according to claim 4, **characterized in that** additional guide elements (21) are arranged or provided, respectively, on the outside of the diverting conveyor systems (15, 16), viewed relative to the transport paths (17, 18).

## Revendications

1. Procédé de préparation de marchandises à partir d'outils de chargement de stockage (2) dans des outils de chargement de commandes (3) par un préparateur de commandes (4) dans un lieu de travail de préparation de commandes en fonction d'ordres de préparation de commandes, dans lequel les outils de chargement de stockage (2) ainsi que les outils de chargement de commandes (3) d'un poste de préparation des commandes (5) sont amenés au moyen d'un premier engin de manutention (6) et les outils de chargement de stockage (2) ainsi que les outils de chargement de commandes (3) sont évacués au moyen d'un deuxième engin de manutention (7), un trajet d'amenée (11, 11') du premier engin de manutention (6) prenant fin au niveau d'une section de transfert (12, 12') vers le poste de préparation des commandes (5) et un trajet d'évacuation (13, 13') du deuxième engin de manutention (7) commençant au niveau d'une section de reprise (14,14') depuis le poste de préparation des commandes (5), **caractérisé en ce qu'**à la fois les outils de chargement de stockage (2) et les outils de chargement de commandes (3) sont chacun transportés dans la zone du poste de préparation des commandes (5) au moyen d'engins de manutention à déviation (15, 16), les outils de chargement de stockage (2) étant transportés au moyen du premier engin de manutention à déviation (15) depuis la section de transfert (12) du premier engin de manutention (6) pour les outils de chargement de stockage (2) jusqu'à la section de reprise (14) du deuxième engin de manutention (7) pour les outils de chargement de stockage (2) par le biais d'un premier chemin de transport (17) s'étendant de façon courbée, au moins partiellement en forme d'arc, et les outils de chargement de commandes (3) étant transportés au moyen du deuxième engin de manutention à déviation (16) depuis la section de transfert (12') du premier engin de manutention (6) pour les outils de chargement de commandes (3) jusqu'à la section de reprise (14') du deuxième engin de manutention (7) pour les outils de chargement de commandes (3) par le biais d'un autre chemin de transport (18) s'étendant de façon courbée, au moins partiellement en forme d'arc, **en ce que** ce faisant, à la fois les outils de chargement de stockage (2) et les outils de chargement de commandes (3) sont chacun déplacés, pendant leur mouvement de transport le long des chemins de transport (17, 18) dans la zone des engins de manutention à déviation (15, 16), avec leur extrémité avant (19, 20) dans le sens du transport, et **en ce que** pour la préparation des commandes de marchandises, les outils de chargement de stockage (2) sont mis à la disposition du préparateur de commandes (4) sur le premier chemin de transport (17) et les moyens de chargement de commandes (3) sur l'autre chemin de transport (18), le préparateur de commandes (4) pouvant, après la prise des marchandises à partir des outils de chargement de stockage (2) mis à sa disposition, les déposer dans les outils de chargement de commandes (3) prévus à cette fin avec un simple mouvement de pivotement du corps.

2. Procédé selon la revendication 1, **caractérisé en ce que** les outils de chargement de stockage (2) et les outils de chargement de commandes (3) sont déplacés le long des chemins de transport (17, 18) de telle sorte qu'un bord latéral plus long des outils de chargement de stockage (2) et des outils de chargement de commandes (3), qui présentent chacun une forme rectangulaire, est dirigé vers le préparateur de commandes (4).

3. Procédé selon la revendication 1 ou 2, **caractérisé en ce que** les outils de chargement de stockage (2) sont déplacés à partir d'une première section de transfert (12) au niveau d'un premier trajet d'amenée (11) le long du premier chemin de transport (17) jusqu'à une première section de reprise (14) au niveau d'un convoyeur de collecte (25) et les outils de chargement de commande (3) sont déplacés à partir d'une deuxième section de transfert (12') au niveau d'un deuxième dispositif d'amenée (11') le long du deuxième chemin de transport (18) jusqu'à une deuxième section de reprise (14') au niveau du convoyeur de collecte (25) précité et **en ce que** les outils de chargement de stockage (2) et les outils de chargement de commandes (3) sont ensuite évacués par le convoyeur de collecte (25) sur un convoyeur commun.

4. Installation de préparation de commandes (1) pour la réalisation du procédé selon la revendication 1, comprenant un premier engin de manutention (6) pour l'amenée des outils de chargement de stockage (2) ainsi que des outils de chargement de commandes (3), un deuxième engin de manutention (7) pour l'évacuation des outils de chargement de stockage (2) ainsi que des outils de chargement de commandes (3), un poste de préparation des commandes (5) auquel les outils de chargement de stockage (2) ainsi que les outils de chargement de commandes (3) peuvent être amenés et dont ils peuvent être évacués au moyen des engins de manutention (6, 7), un trajet d'amenée (11, 11') du premier engin de manutention (6) prenant fin au niveau d'une section de transfert (12, 12') vers le poste de préparation des commandes (5) et un trajet d'évacuation (13, 13') du deuxième engin de manutention (7) commençant au niveau d'une section de reprise (14, 14') depuis le poste de préparation des commandes (5), **caractérisée en ce que** le poste de préparation des commandes (5) comprend des engins de manutention à déviation (15, 16), le premier engin de manutention à déviation (15) reliant la section de transfert (12) du premier engin de manutention (6) pour les outils de chargement de stockage (2) avec la section de reprise (14) du deuxième engin de manutention (7) pour les outils de chargement de stockage (2) par le biais d'un premier chemin de transport (17) s'étendant de façon courbée, au moins partiellement en forme d'arc, et le deuxième engin de manutention à déviation (16) reliant la section de transfert (12') du premier engin de manutention (6) pour les outils de chargement de commandes (3) avec la section de reprise (14') du deuxième engin de manutention (7) pour les outils de chargement de commandes (3) par le biais d'un autre chemin de transport (18) s'étendant de façon courbée, au moins partiellement en forme d'arc, les engins de manutention à déviation (15, 16) étant réalisés de telle sorte que vu dans le sens du transport, une extrémité avant (19) des outils de chargement de stockage (2) ainsi qu'une extrémité avant (20) des outils de chargement de commandes (3) forment toujours, pendant la poursuite de leur transport le long des chemins de transport (17, 18) dans la zone des engins de manutention à déviation (15, 16), l'extrémité avant des outils de chargement (2, 3) vus dans le sens de transport.

5. Installation de préparation de commandes (1) selon la revendication 4, **caractérisée en ce que** le premier et le deuxième engin de manutention (6, 7) sont agencés de façon à s'étendre l'un à côté de l'autre.

6. Installation de préparation de commandes (1) selon la revendication 4 ou 5, **caractérisée en ce que** le premier engin de manutention (6) comprend, aux fins de l'amenée, un premier dispositif d'amenée (8) pour les outils de chargement de stockage (2) ainsi qu'un deuxième dispositif d'amenée (9) pour les outils de chargement de commandes (3).

7. Installation de préparation de commandes (1) selon la revendication 6, **caractérisée en ce que** le premier engin de manutention (6) comprend, aux fins de l'amenée, plusieurs premiers dispositifs d'amenée (8) pour les outils de chargement de stockage (2) ainsi que plusieurs deuxièmes dispositifs d'amenée (9) pour les outils de chargement de commandes (9).

8. Installation de préparation de commandes (1) selon l'une des revendications 4 à 7, **caractérisée en ce que** le deuxième engin de manutention (7) comprend, aux fins de l'évacuation, un dispositif d'évacuation (10) avec un convoyeur commun (24) à la fois pour les outils de chargement de stockage (2) et pour les outils de chargement de commandes (3).

9. Installation de préparation de commandes (1) selon la revendication 8, **caractérisée en ce que** les chemins de transport (17, 18) des deux engins de manutention à déviation (15, 16), partant chacun des sections de transfert (12, 12') du premier et du deuxième dispositif d'amenée (8, 9), sont dirigés de façon à converger l'un vers l'autre vers la section de reprise (14, 14') du dispositif d'évacuation (10) avec le convoyeur commun (24).

10. Installation de préparation de commandes (1) selon la revendication 8 ou 9, **caractérisée en ce que** le dispositif d'évacuation (10), avec son convoyeur commun (24), comprend un convoyeur de collecte (25) agencé de façon directement consécutive aux deux engins de manutention à déviation (15, 16), qui sur son côté dirigé vers le poste de préparation des commandes (5), se rattache avec ses deux sections de reprise (14, 14') agencées à distance l'une de l'autre aux deux engins de manutention à déviation (15, 16) et avec lequel à la fois les outils de chargement de stockage (2) et les outils de chargement de commandes (3) peuvent être évacués les uns après les autres du poste de préparation des commandes (5) vers le convoyeur commun (24).

11. Installation de préparation de commandes (1) selon la revendication 8 ou 9, **caractérisée en ce que** le dispositif d'évacuation (10), avec son convoyeur commun (24), comprend également un convoyeur d'alimentation (26) débouchant latéralement dans le trajet d'évacuation (13, 13') du convoyeur commun (24), une première section de reprise (14) du convoyeur d'alimentation (26) se rattachant à l'un des engins de manutention à déviation (15, 16) et une deuxième section de reprise (14') du convoyeur commun (24) se rattachant à l'autre des engins de manutention à déviation (16, 15).

12. Installation de préparation de commandes (1) selon l'une des revendications 4 à 7, **caractérisée en ce que** le deuxième engin de manutention (7) comprend, aux fins de l'évacuation, un premier dispositif d'évacuation (27) pour les outils de chargement de stockage (2) ainsi qu'un deuxième dispositif d'évacuation (28) pour les outils de chargement de commandes (3).

13. Installation de préparation de commandes (1) selon la revendication 12, **caractérisée en ce qu'**à la fois le premier et le deuxième dispositifs d'évacuation (27, 28) du deuxième engin de manutention (7) se rattachent sur le côté extérieur aux deux engins de manutention à déviation (15, 16) du poste de préparation des commandes (5) et le premier engin de manutention (6) est agencé entre les deux dispositifs d'évacuation (27, 28).

14. Installation de préparation de commandes (1) selon l'une des revendications 4 à 13, **caractérisé en ce que** le chemin de transport (17, 18) est réalisé de façon à s'étendre au moins partiellement en ligne droite dans la zone des engins de manutention à déviation (15, 16) sur un côté dirigé vers le lieu de travail de préparation des commandes du préparateur de commandes (4).

15. Installation de préparation de commandes (1) selon la revendication 4, **caractérisée en ce que** sur le côté extérieur par rapport aux chemins de transport (17, 18), des organes de guidage supplémentaires (21) sont agencés ou prévus au niveau des engins de manutention à déviation (15, 16).
